(19) Europäisches Patentamt
European Patent Office
Office européen des brevets

(11) EP 2 581 716 A1

(12) EUROPEAN PATENT APPLICATION
published in accordance with Art. 153(4) EPC

(43) Date of publication:
**17.04.2013 Bulletin 2013/16**

(21) Application number: **11792174.2**

(22) Date of filing: **10.06.2011**

(51) Int Cl.:
***G01F 1/66*** *(2006.01)*

(86) International application number:
**PCT/JP2011/003299**

(87) International publication number:
**WO 2011/155215 (15.12.2011 Gazette 2011/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.07.2010 JP 2010151757**
**11.06.2010 JP 2010133626**

(71) Applicant: **Panasonic Corporation**
**Kadoma-shi**
**Osaka 571-8501 (JP)**

(72) Inventors:
- **GOTOU, Hirokazu**
  **Osaka 540-6207 (JP)**
- **NAKABAYASHI, Yuji**
  **Osaka 540-6207 (JP)**
- **FUJII, Yuji**
  **Osaka 540-6207 (JP)**
- **WATANABE, Aoi**
  **Osaka 540-6207 (JP)**

(74) Representative: **Schwabe - Sandmair - Marx**
**Patentanwälte**
**Stuntzstraße 16**
**81677 München (DE)**

# (54) FLOW RATE MEASURING DEVICE

(57) In a flow meter device of the present invention, a control means (7) causes a temperature measuring means (8) to singly measure a temperature of a fluid. A flow compensation means (6) calculates a temperature of a fluid from a propagation time and makes compensation for the flow rate using the temperature calculated based on the propagation time in a state in which the temperature is not measured by the temperature measuring means (8). Thus, when compensation is made for the measured flow rate to derive a flow rate at a desired temperature, flow rate compensation can be implemented with high accuracy, versatility of a target fluid can be improved, and low electric power consumption can be achieved.

Fig. 1

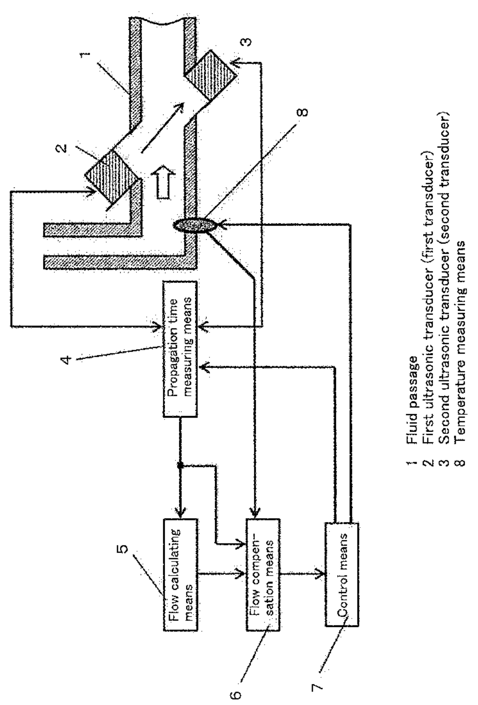


EP 2 581 716 A1

## Description

### Technical Field

The present invention relates to a flow meter device which measures a flow rate of a fluid such as gas or water by utilizing an ultrasonic wave.

### Background Art

A typical example of a conventional fluid flow meter device utilizing an ultrasonic wave is shown in, for example, Fig. 8 disclosed in Patent Literature 1. This flow meter device includes a first ultrasonic transducer 12 attached on a fluid passage 11 through which a fluid flows, a second ultrasonic transducer 13 attached on the fluid passage 11, a temperature measuring means 18 for measuring a real temperature of the fluid flowing through the fluid passage 11, a propagation time measuring means 14 which actuates the first ultrasonic transducer 12 and the second ultrasonic transducer 13 and measures a propagation time for which an ultrasonic signal is transmitted and received between the first and second ultrasonic transducers 12 and 13, a control means 17 for controlling a timing at which the propagation time measuring means 14 measures the propagation time, a flow calculating means 15 for calculating a flow rate of the fluid based on the propagation time measured by the propagation time measuring means 14, and a flow compensation means 16 for making compensation for the calculated flow rate based on the temperature measured by the temperature measuring means 18.

In this flow meter device, the control means 17 actuates the propagation time measuring means 14 at a preset timing at which measurement is to be performed. The propagation time measuring means 14 actuates the first ultrasonic transducer 12 and the second ultrasonic transducer 13 in response to a command issued from the control means 17, and measures a propagation time for which the ultrasonic signal is transmitted and received between the first ultrasonic transducer 12 and the second ultrasonic transducer 13. The flow calculating means 15 calculates a flow velocity and a flow rate of the fluid flowing through the fluid passage 11 based on the propagation time measured by the propagation time measuring means 14. The temperature measuring means 18 measures a real temperature of the fluid flowing through the fluid passage 11. The flow compensation means 16 makes compensation for the flow rate calculated by the flow calculating means 15 based on the real temperature measured by the temperature measuring means 18, thereby deriving a flow rate at a desired temperature.

Patent Literature 1 also discloses a flow meter device having a configuration shown in Fig. 9. This flow meter device includes a first ultrasonic transducer 12 attached on a fluid passage 11 through which a fluid flows, a second ultrasonic transducer 13 attached on the fluid passage 11, a propagation time measuring means 14 which actuates the first ultrasonic transducer 12 and the second ultrasonic transducer 13 and measures a propagation time for which an ultrasonic signal is transmitted and received between the first and second ultrasonic transducers 12 and 13, a control means 17 for controlling a timing at which the propagation time measuring means 14 measures the propagation time, a flow calculating means 15 for calculating a flow rate of the fluid based on the propagation time measured by the propagation time measuring means 14, and a flow compensation means 16 for making compensation for the flow rate calculated by the flow calculating means 15, based on a temperature of the fluid calculated based on the propagation time measured by the propagation time measuring means 14.

In this flow meter device, the control means 17 actuates the propagation time measuring means 14 at a preset timing at which measurement is to be performed. The propagation time measuring means 14 actuates the first ultrasonic transducer 12 and the second ultrasonic transducer 13 in response to a command issued from the control means 17, and measures a propagation time for which an ultrasonic signal is transmitted and received between the first ultrasonic transducer 12 and the second ultrasonic transducer 13. The flow calculating means 15 calculates a flow velocity and a flow rate of the fluid flowing through the fluid passage 11 based the propagation time measured by the propagation time measuring means 14. The temperature of the fluid flowing through the fluid passage 11 can be calculated based on the propagation time measured by the propagation time measuring means 14. Therefore, the flow compensation means 16 makes compensation for the flow rate calculated by the flow calculating means 15 based on the calculated temperature of the fluid, thereby deriving a flow rate at a desired temperature.

In general, a sound velocity **C** and a temperature **T** of a gas can be approximated as a linear expression. Specifically, when a temperature coefficient is **A** and a sound velocity of a target gas at 0 degree **C** is **C0**, the approximate expression of the sound velocity **C** and the temperature **T** can be expressed as the following expression (formula) (1):

$$C = A \times T + C0 \ \ldots (1)$$

A propagation time t of the ultrasonic signal is a value which is derived by dividing a distance **L** between the first ultrasonic transducer 12 and the second ultrasonic transducer 13, by the sound velocity of the fluid, and therefore can be expressed as the following expression (2):

$$t = L/C = L/(A \times T + C0) \ \ldots (2)$$

Therefore, the temperature T of the gas can be expressed as the following expression (3) from the expression (1) and the expression (2).

$$T = (L / t - C0) / A \dots (3)$$

In the case where a fluid (target fluid) whose flow rate is to be measured is a gas, and the fluid flowing through the fluid passage 11 is known in advance, the temperature **T** of the fluid is defined such that the temperature coefficient **A** of the sound velocity and the sound velocity **C0** at 0 degree C become constant values. Therefore, the temperature **T** of the fluid can be calculated based on the propagation time **t** of the ultrasonic wave. In this way, in the conventional flow meter device, compensation was made for the flow rate calculated by the flow calculating means 15 to derive a flow rate at a desired temperature by calculating the temperature **T** of the fluid based on the propagation time **t** of the ultrasonic wave.

## Citation Lists

### Patent Literature

Patent Literature 1 Japanese Laid-Open Patent Application Publication No. 2001-241988

## Summary of the Invention

### Technical Problem

However, in the conventional flow meter device using the temperature measuring means 18, a thermistor is typically used as the temperature measuring means 18, and is required to be supplied with electric power all the time, which increases electric power consumption.

In the conventional flow meter device which calculates the temperature of the fluid based on the propagation time, the temperature measuring means 18 is not used, and therefore low electric power consumption can be achieved. However, the temperature of the fluid cannot be calculated accurately, and compensation for deriving a flow rate at a desired temperature cannot be made accurately, due to a difference in dimension between the first and second ultrasonic transducers 12 and 13, a measurement variation of the propagation time, measurement errors of the propagation time, etc..

As can be seen from the formula (1), in the case of calculating the temperature of the fluid based on the propagation time, it becomes necessary to identify a kind of the fluid which is a target. Because of this, plural kinds of target fluids cannot be addressed satisfactorily.

In the aforesaid conventional flow meter device, it is difficult to achieve low electric power consumption while achieving highly accurate flow rate compensation or improvement of versatility of a target fluid.

The present invention has been made to solve the above described problem, and an object of the present invention is to provide a flow meter device which can achieve low electric power consumption while achieving highly accurate flow rate compensation or improvement of versatility of a target fluid, when compensation is made for a measured flow rate to derive a flow rate at a desired temperature.

### Solution to Problem

To solve the above described problem, a flow meter device of the present invention comprises a first transducer and a second transducer which are provided at a fluid passage and transmit and receive an ultrasonic signal; a temperature measuring means for measuring a temperature of a fluid flowing through the fluid passage; a propagation time measuring means for measuring a propagation time for which the ultrasonic signal is transmitted and received between the first and second transducers; a flow calculating means for calculating a flow rate of the fluid based on the propagation time measured by the propagation time measuring means; a flow compensation means which calculates a temperature of the fluid based on the propagation time measured by the propagation time measuring means and makes compensation for the flow rate of the fluid using at least one of the calculated temperature and the temperature measured by the temperature measuring means; and a control means for controlling at least an operation of the temperature measuring means and an operation of the propagation time measuring means; wherein the control means causes the temperature measuring means to singly measure the temperature of the fluid; and the flow compensation means calculates the temperature of the fluid based on the propagation time, and makes compensation for the flow rate using the temperature calculated based on the propagation time in a state in which the temperature is not measured by the temperature measuring means.

In the flow meter device having the above configuration, the flow compensation means may calculate the temperature of the fluid, with reference to a temperature-time characteristic of the fluid specified based on the propagation time measured by the propagation time measuring means or a sound velocity of the fluid calculated based on the propagation time and the temperature measured by the temperature measuring means; and the flow compensation means may make compensation for the flow rate calculated by the flow calculating means based on the calculated temperature to derive a flow rate at a desired temperature.

In the flow meter device having the above configuration, the flow compensation means may calculate a temperature difference between the temperature of the fluid which is measured by the temperature measuring means and the temperature of the fluid calculated based on the propagation time, and hold the temperature difference as a temperature compensation value; and the flow compensation means makes compensation for the flow rate using the temperature calculated based on the propagation time after making compensation for the calculated temperature based on the temperature compensation value.

The above and further objects, features and advantages of the present invention will more fully be apparent from the following detailed description of preferred embodiments with accompanying drawings.

## Advantageous Effects of the Invention

As described above, the present invention achieves advantages that it is possible to provide a flow meter device which can achieve low electric power consumption while achieving highly accurate flow rate compensation or improvement of versatility of a target fluid, when compensation is made for a measured flow rate to derive a flow rate at a desired temperature.

## Brief Description of the Drawings

[Fig. 1] Fig. 1 is a block diagram showing an exemplary configuration of a flow meter device according to Embodiment 1 to Embodiment 6 of the present invention.

[Fig. 2] Fig. 2 is a flowchart showing exemplary control of the flow meter device according to Embodiment 1 of the present invention.

[Fig. 3] Fig. 3 is a flowchart showing exemplary control of a flow meter device according to Embodiment 2 of the present invention.

[Fig. 4] Fig. 4 is a flowchart showing exemplary control of a flow meter device according to Embodiment 3 of the present invention.

[Fig. 5] Fig. 5 is a flowchart showing exemplary control of a flow meter device according to Embodiment 4 of the present invention.

[Fig. 6] Fig. 6 is a flowchart showing exemplary control of a flow meter device according to Embodiment 5 of the present invention.

[Fig. 7] Fig. 7 is a flowchart showing exemplary control of a flow meter device according to Embodiment 6 of the present invention.

[Fig. 8] Fig. 8 is a block diagram showing a configuration of a conventional ultrasonic flow meter.

[Fig. 9] Fig. 9 is a block diagram showing another configuration of a conventional ultrasonic flow meter.

## Description of the Embodiments

A flow meter device of the present invention comprises a first transducer and a second transducer which are provided at a fluid passage and transmit and receive an ultrasonic signal; a temperature measuring means for measuring a temperature of a fluid flowing through the fluid passage; a propagation time measuring means for measuring a propagation time for which the ultrasonic signal is transmitted and received between the first and second transducers; a flow calculating means for calculating a flow rate of the fluid based on the propagation time measured by the propagation time measuring means; a flow compensation means which calculates a temperature of the fluid based on the propagation time measured by the propagation time measuring means and makes compensation for the flow rate of the fluid using at least one of the calculated temperature and the temperature measured by the temperature measuring means; and a control means for controlling at least an operation of the temperature measuring means and an operation of the propagation time measuring means; wherein the control means causes the temperature measuring means to singly measure the temperature of the fluid; and the flow compensation means calculates the temperature of the fluid based on the propagation time, and makes compensation for the flow rate using the temperature calculated based on the propagation time in a state in which the temperature is not measured by the temperature measuring means.

In the flow meter device having the above configuration, the flow compensation means may calculate the temperature of the fluid, with reference to a temperature-time characteristic of the fluid specified based on the propagation time measured by the propagation time measuring means or a sound velocity of the fluid calculated based on the propagation time and the temperature measured by the temperature measuring means; and the flow compensation means may make compensation for the flow rate calculated by the flow calculating means based on the calculated temperature to derive a flow rate at a desired temperature.

In the configuration for specifying the temperature-time characteristic, the control means may cause the temperature measuring means to singly measure the temperature on a regular basis; and the flow compensation means may specify and update the temperature-time characteristic for each measurement of the temperature which is performed by the temperature measuring means.

In the configuration for specifying the temperature-time characteristic, the control means may cause the temperature measuring means to singly measure the temperature on a regular basis; and when the measured temperature changes by a preset predetermined value or greater from a temperature measured when the temperature-time characteristic has been updated previously, the flow compensation means may specify and update the temperature-time characteristic based on a presently measured temperature.

In the configuration for specifying the temperature-time characteristic, when the temperature measured by the temperature measuring means changes by a preset predetermined value or greater from a previously measured temperature, the control means may cause the temperature measuring means to measure the temperature of the fluid; and the flow compensation means may specify and update the temperature-time characteristic based on the measured temperature.

In the flow meter device having the above configuration, the flow compensation means may calculate a temperature difference between the temperature of the fluid which is measured by the temperature measuring means and the temperature of the fluid calculated based on the propagation time, and hold the temperature difference as a temperature compensation value; and the flow compensation means may make compensation for the flow rate using the temperature calculated based on the propagation time after making compensation for the calculated temperature based on the temperature compensation value.

In the configuration for holding the temperature compensation value, the control means may cause the temperature measuring means to singly measure the temperature on a regular basis; and the flow compensation means may update the held temperature compensation value based on the temperature measured on a regular basis.

In the configuration for holding the temperature compensation value, when the flow rate calculated by the flow calculating means is equal to or greater than a preset predetermined flow rate, the control means may cause the temperature measuring means to measure the temperature of the fluid; and the flow compensation means may update the held temperature compensation value based on the measured temperature.

In the configuration for holding the temperature compensation value, when the temperature measured by the temperature measuring means changes by a preset predetermined a value or greater from a previously measured temperature, the control means may cause the temperature measuring means to measure the temperature of the fluid; and the flow compensation means may update the held temperature compensation value based on the measured temperature.

Hereinafter, preferred embodiments of the present invention will be described with reference to the drawings. Throughout the drawings, the same or corresponding components are designated by the same reference symbols, and will not be described in repetition. Note that the embodiments are in no way intended to limit the present invention.

(**Embodiment 1**)

**[Configuration of flow meter device]**

First of all, an exemplary configuration of a flow meter device according to Embodiment 1 of the present invention will be described with reference to Fig. 1. Fig. 1 is a block diagram showing an exemplary configuration of a flow meter device according to Embodiment 1 of the present invention.

As shown in Fig. 1, the flow meter device of the present invention includes a first ultrasonic transducer 2 (first transducer), a second ultrasonic transducer 3 (second transducer), a propagation time measuring means 4, a flow calculating means 5, a flow compensation means 6, a control means 7, and a temperature measuring means 8.

The first ultrasonic transducer 2 and the second ultrasonic transducer 3 are attached on a portion of a fluid passage 1 such that they face each other with the fluid passage 1 sandwiched between them. In the present embodiment, the first ultrasonic transducer 2 is disposed at an upstream side and the second ultrasonic transducer 3 is disposed at a downstream side in a fluid flow direction indicated by a block arrow in Fig. 1. The first ultrasonic transducer 2 and the second ultrasonic transducer 3 are adapted to face each other in a direction inclined with respect to the flow direction of a gas, instead of a direction perpendicular to the flow direction of the gas.

The temperature measuring means 8 is attached on a portion of the fluid passage 1, and measures a temperature of the fluid flowing through the fluid passage 1, in response to a command issued from the control means 7. As will be described later, the flow compensation means 6 also calculates a temperature. Therefore, in description below, the temperature measured by the temperature measuring means 8 will be referred to as a real temperature, while the temperature calculated by the flow compensation means 6 will be referred to as a calculated temperature.

The propagation time measuring means 4 actuates the first ultrasonic transducer 2 and the second ultrasonic transducer 3 in response to a command issued from the control means 7, and measures a propagation time for which an ultrasonic signal is transmitted and received between the first ultrasonic transducer 2 and the second ultrasonic transducer 3. The flow calculating means 5 calculates a flow rate of the fluid flowing through the fluid passage 1 based the propagation time of the ultrasonic signal which is measured by the propagation time measuring means 4. The flow compensation means 6 makes compensation for the flow rate calculated by the flow calculating means 5 based on the real temperature of the fluid measured by the temperature measuring means 8, based on the calculated temperature of the fluid calculated based on the propagation time measured by the propagation time measuring means 4, or based on both of the real temperature and the calculated temperature, thereby deriving a flow rate at a desired temperature. The control means 7 issues the command to the propagation time measuring means 4 to initiate measurement of the flow rate and issues the command to the temperature measuring means 8 to initiate measurement of the real temperature.

The flow compensation means 6 makes compensation for the flow rate calculated by the flow calculating means 5 to derive a desired flow rate in, for example, cases as follows. For example, in a case where the measured flow rate is a volume flow (volumetric flow rate), a volume changes with a temperature change, and correspondingly, the propagation time of the ultrasonic signal transmitted and received between the ultrasonic transducers 2 and 3 also changes. Therefore, the flow compensation means 6 makes compensation for the calculated flow so as to correspond to the propagation time measured at a desired temperature, based on a change in the propagation time associated with the temperature change. In a case where the measured flow rate is a mass flow rate, a density of a fluid required to calculate the mass flow rate changes with a temperature change. Therefore, the flow compensation means 6 makes compensation for the calculated flow rate so as to correspond to a density measured at a desired temperature, based on a change in the density associated with the temperature change. The desired temperature is defined as, for example, a reference temperature at which the flow rate is measured. Since the temperature of the fluid changes depending on an environment in which the flow meter device is used, compensation is made for the flow rate according to the reference temperature.

In the present embodiment (and the following embodiments), the fluid flowing through the fluid passage 1, i.e., a fluid (target fluid) which is a measurement target is the gas. The fluid passage 1 on which the first and second ultrasonic transducers 2 and 3 are attached may be a fluid passage such as a pipe through which the gas flows. As the first ultrasonic transducer 2 and the second ultrasonic transducer 3, transducers known in a field of the flow meter device utilizing the ultrasonic wave can be suitably used, and its specific configuration is not limited. As the temperature measuring means 8, a temperature measuring means known in a field of the flow meter device, such as a known thermistor, can be suitably used, and its specific configuration is not limited.

In the present embodiment, the control means 7 is constituted by, for example, a microcomputer. The microcomputer includes a processor section, a storage section, etc.. The processor section is constituted by a CPU of the microcomputer, while the storage section is constituted by an internal memory. Various programs are stored in the storage section, and conditions and set values which are preset for calculation of the flow rate are stored in the storage section. The processor section executes calculation for deriving the flow rate, etc., and makes compensation for the set values stored in the storage section as desired, using the program stored in the storage section. The storage section is not limited to the internal memory, but may be constituted by an independent memory, or a plurality of storage means.

The propagation time measuring means 4, the flow calculating means 5 and the flow compensation means 6 may be each configured as a logic circuit, etc., including a known switching element, a known subtracter, a known comparator, etc., or may be implemented by the processor's operation according to the program stored in the storage section, i.e., a functional configuration of the control means 7.

Of course, the flow meter device of the present invention may include components in addition to the first and second ultrasonic transducers 2 and 3, the propagation time measuring means 4, the flow calculating means 5, the flow compensation means 6, the control means 7 and the temperature measuring means 8. These components may be said as functional units of the flow meter device. Therefore, in the present embodiment, for example, the propagation time measuring means 4 may be read as a propagation time measuring section, the flow calculating means 5 may be read as a flow calculating section, the flow compensation means 6 may be read as a flow compensation section, the control means 7 may be read as a control section or a controller, and the temperature measuring means 8 may be read as a temperature measuring section, a temperature sensor, etc..

[**Control for flow meter device**]

Regarding the flow meter device configured as described above, control for its operation and its action will be specifically described with reference to Fig. 2. Fig. 2 is a flowchart showing exemplary control of the operation of the flow meter device according to Embodiment 1 of the present invention.

In the flow meter device of the present invention, the control means 7 is configured to cause the temperature measuring means 8 to singly measure a real temperature of a target fluid (fluid whose flow rate is to be measured). The flow compensation means 6 is configured to calculate a temperature of the target fluid based on a propagation time measured by the propagation time measuring means 4 and make compensation for the flow rate using the temperature calculated based on the propagation time in the state in which the temperature of the target fluid is not measured by the temperature measuring means 8.

In the present embodiment, the flow compensation means 6 is configured to calculate the calculated temperature of the target fluid based on the propagation time with reference to a temperature-propagation time characteristic of the target fluid which is specified based on the propagation time and the real temperature, and make compensation for the flow rate calculated by the flow calculating means 5 based on the calculated temperature, thereby deriving a flow rate at a desired temperature.

Specifically, as shown in Fig. 2, initially, the control means 7 starts control for measurement of the flow rate (step S001), and determines whether or not a time is a preset timing at which the flow rate is measured (step S002). If it is determined that the time is not the preset timing (No in step S002), the control means 7 repeats this determination. On the other hand, if it is determined that the time is the preset timing (Yes in step S002), the control means 7 outputs a flow rate measurement command to the propagation time measuring means 4 to activate (turn ON) the propagation time measuring means 4 (step S003).

In the activated state, the propagation time measuring means 4 actuates the first ultrasonic transducer 2 and the second ultrasonic transducer 3 (step S004), measures a propagation time (propagation time **t** in Fig. 2) of an ultrasonic signal transmitted and received between the ultrasonic transducers 2 and 3, and outputs the measured propagation time to the flow calculating means 5 (step S005). The flow calculating means 5 calculates a flow rate (flow rate **Q** in Fig. 2) of the target fluid flowing through the fluid passage 1 based on the propagation time t measured by the propagation time measuring means 4 (step S006). The flow compensation means 6 calculates a sound velocity of the target fluid based on the propagation time **t**. A sound velocity **v** of the target fluid is calculated based on the following formula (4) when a distance between the first ultrasonic transducer 2 and the second ultrasonic transducer 3 is **L**:

$$v = L/t \ \dots (4)$$

The flow compensation means 6 determines whether or not the temperature-propagation time characteristic of the target fluid has been already specified, i.e., the temperature-propagation time characteristic of the target fluid has been calculated (step S008). If it is determined that the temperature-propagation time characteristic of the target fluid has not been calculated (No in step S008), the flow compensation means 6 outputs a result of the determination to the control means 7. The control means 7 outputs a command to the temperature measuring means 8 to measure the temperature. In response to this, the temperature measuring means 8 measures the real temperature of the target fluid, and outputs a result of the measurement to the flow compensation means 6 (step S009).

Receiving the result of measurement of the real temperature, the flow compensation means 6 determines whether or not the measurement of the real temperature is second measurement (step S010). If it is determined that the measurement of the real temperature is the second measurement (Yes in step S010), the flow compensation means 6 calculates and specifies the temperature-propagation time characteristic of the target fluid based on the real temperature and the propagation time in the first measurement and the real temperature and the propagation time in the second measurement, i.e., the real temperatures and the propagation times at two points (step S011). The flow compensation means 6 calculates the temperature of target fluid based on the propagation time with reference to the specified (calculated) temperature-propagation time characteristic (step S012).

On the other hand, if it is determined that the measurement of the real temperature is not the second measurement, i.e., the measurement of the real temperature is the first measurement (No in step S010), the flow compensation means 6 sets the measured real temperature as the temperature of the target fluid (step S013). If it is determined that the temperature-propagation time characteristic has already been calculated (Yes in step S008), the flow compensation means 6 calculates the temperature with reference to the calculated temperature-propagation time characteristic (step S012).

Thereafter, the flow compensation means 6 makes compensation for the flow rate calculated by the flow calculating means 5, with reference to the calculated temperature-propagation time characteristic, or based on the real temperature of the target fluid measured by the temperature measuring means 8, thereby deriving a flow rate at a desired temperature (step S014). After that, the process returns to step (step S002) of determinations as to whether or not a time is a timing at which the flow rate is measured, and the control means 7 repeats the series of control processes.

As described above, in the present embodiment, before the temperature-propagation time characteristic of the target fluid is specified, the flow compensation means 6 makes compensation for the calculated flow based on the real temperature measured by the temperature measuring means 8, thereby deriving the flow rate at the desired temperature, whereas after the temperature-propagation time characteristic of the target fluid has been specified, the flow compensation means 6 calculates the calculated temperature of the target fluid only based on the propagation time measured by the propagation time measuring means 4. Therefore, the temperature measuring means 8 need not measure the real temperature all the time, which can achieve low electric power consumption.

In the present embodiment, furthermore, the temperature-propagation time characteristic is specified and updated depending on the kind of the target fluid, which makes it possible to learn a temperature-time characteristic depending on the target fluid. Since plural kinds of target fluids can be addressed in this way, temperature compensation can be performed with low electric power consumption and versatility of the target fluid can be improved.

Although in the present embodiment, in step S008 to S013 in Fig. 2, the flow compensation means 6 specifies or updates the temperature-propagation time characteristic, the present invention is not limited to this, and a characteristic indicating a relation between a temperature of a flow rate and a sound velocity of a flow rate, i.e., temperature-sound velocity characteristic may be specified and updated. In this case, the flow compensation means 6 may calculate a temperature-sound velocity characteristic using a sound velocity of the target fluid obtained in step S007. The propagation time and the sound velocity are parameters of the target fluid in time, and therefore in the present invention, the temperature-propagation time characteristic and the temperature-sound velocity characteristic are collectively referred to as a temperature-time characteristic.

In the present embodiment, the flow compensation means 6 is configured to make compensation for the flow rate calculated by the flow calculating means 5, thereby deriving the flow rate at the desired temperature. In this case, the obtained flow rate is a volume flow (volumetric flow rate). Therefore, without measuring the real time all the time, the flow meter device of the present invention can derive the volume flow at a particular temperature (or preset temperature) depending on an aim of measurement of the flow rate, the kind of the target fluid, etc.. The flow meter device of the present invention is also capable of deriving a mass flow (mass flow rate) rather than the volume flow (volumetric flow rate). This is the same in embodiments below.

(**Embodiment 2**)

A flow meter device according to Embodiment 2 of the present invention has fundamentally the same configuration as that of Embodiment 1, except for a timing at which the temperature measuring means 8 measures the real temperature in control for the measurement of the flow rate. Regarding the flow meter device having such a configuration, control for its operation and its action will be described with reference to Fig. 3. Fig. 3 is a flowchart showing exemplary control of the operation of the flow meter device according to Embodiment 2 of the present invention.

In the flow meter device of the present embodiment, like Embodiment 1, the control means 7 is configured to cause the temperature measuring means 8 to singly measure a real temperature of a target fluid. The flow compensation means 6 is configured to calculate a temperature (calculated temperature) based on a propagation time measured by the propagation time measuring means 4, and make compensation for the flow rate using the calculated temperature in the state in which the real temperature is not measured by the temperature measuring means 8. A specific configuration of the flow meter device is the same as that of Fig. 1 described in Embodiment 1.

In Embodiment 1, the control means 7 is configured to cause the temperature measuring means 8 to measure the real temperature in the case where the temperature-time characteristic of the target fluid cannot be specified. In the present embodiment, the control means 7 is configured to cause the temperature measuring means 8 to singly measure the temperature of the target fluid on a regular basis, and the flow compensation means 6 is configured to specify and update a temperature-time characteristic every time the temperature measuring means 8 measures the temperature, as well as when the temperature-time characteristic cannot be specified.

Specifically, as shown in Fig. 3, initially, the control means 7 starts control for measurement of the flow rate (step S101), and determines whether or not a time is a timing at which the flow rate is measured (step S102). If it is determined that the time is not the timing (No in step S102), the control means 7 repeats this determination. On the other hand, if it is determined that the time is the timing (Yes in step S102), the control means 7 activates the propagation time measuring means 4 (step S103), thereby actuating the first ultrasonic transducer 2 and the second ultrasonic transducer 3 (step S104).

The propagation time measuring means 4 measures a propagation time **t** of an ultrasonic signal transmitted and received between the ultrasonic transducers 2 and 3, and outputs the propagation time **t** to the flow calculating means 5 (step S105). The flow calculating means 5 calculates a flow rate **Q** of the target fluid flowing through the fluid passage 1 based on the measured propagation time t (step S106). The flow compensation means 6 calculates a sound velocity **v** of the target fluid based on the propagation time **t** according to the expression (formula) (4) (step S107). Then, the flow compensation means 6 determines whether or not the temperature-propagation time characteristic of the target fluid has been calculated (step S108).

If it is determined that the temperature-propagation time characteristic of the target fluid has not been calculated (No in step S108), the temperature measuring means 8 measures the real temperature of the target fluid (step S 109). Receiving a result of the measurement of the real temperature, the flow compensation means 6 determines whether or not the number of times the real temperature of the target fluid has been measured is twice or more, i.e., there is a history in which the real temperature of the target fluid has been measured twice or more (step S110). If it is determined that the number of times the real temperature of the target fluid has been measured is twice or more (Yes in step S110), the flow compensation means 6 calculates and specifies a temperature-propagation time characteristic based on real temperatures and propagation times at two or more points (or a temperature-sound velocity characteristic of the target fluid based on real temperatures and sound velocities at two or more points) (step S111). Then, the flow compensation means 6 calculates the temperature of the target fluid based on the propagation time with reference to the calculated temperature-propagation time characteristic (step S112).

On the other hand, if it is determined that the number of times the real temperature of the target fluid has been measured is not twice or more, i.e., once (No in step S 110), the flow compensation means 6 sets the measured real temperature as the temperature of the target fluid (step S113).

If it is determined that the temperature-propagation time characteristic has been calculated (Yes in step S108), the control means 7 determines whether or not a predetermined time has passed from previous measurement of the real temperature (in Fig. 3, whether or not the time that has passed from previous measurement is less than a preset threshold) (step S115). This predetermined time (or threshold) is suitably set depending on the kind, use, conditions such as installation location of the flow meter device of the present embodiment, and is not particularly limited. One example of the predetermined time is set to 24 hours such that measurement of the temperature is made once per day.

If it is determined that the predetermined time has passed (not less than the threshold) (No in step S 115), the control means 7 causes the temperature measuring means 8 to measure the real temperature (step S109). After that, the flow compensation means 6 calculates the temperature-time characteristic (step S110, S111) or sets the real temperature (step S110, S113). On the other hand, if it is determined that the predetermined time has not passed yet (less than the threshold) (Yes in step S115), the flow compensation means 6 calculates the calculated temperature of the target fluid with reference to the calculated temperature-propagation time characteristic (step S 112).

Then, the flow compensation means 6 makes compensation for the flow rate calculated by the flow calculating means 5, with reference to the calculated temperature-propagation time characteristic, or based on the real temperature of the fluid measured by the temperature measuring means 8, thereby deriving a flow rate at a desired temperature (step S114). After that, the process returns to step (step S102) of determinations as to whether or not a time is the timing at which the flow rate is measured, and the control means 7 repeats the series of control processes.

As described above, in the present embodiment, before the temperature-propagation time characteristic of the target fluid is specified, the flow compensation means 6 makes compensation for the calculated flow to derive the flow rate at the desired temperature based on the real temperature measured by the temperature measuring means 8, whereas after the temperature-propagation time characteristic of the target fluid has been specified, the flow compensation means 6 calculates the calculated temperature of the target fluid only based on the propagation time measured by the propagation time measuring means 4. Therefore, the temperature measuring means 8 need not measure the real temperature all the time, which can achieve low electric power consumption.

In the present embodiment, furthermore, the temperature-propagation time characteristic of the target fluid is specified and updated depending on the kind of the target fluid, which makes it possible to learn a temperature-time characteristic depending on the target fluid. Since plural kinds of target fluids can be addressed in this way, temperature compensation can be performed with low electric power consumption and versatility of the target fluid can be improved.

In addition to the above, in the present embodiment, the temperature measuring means 8 re-measures the real temperature if the predetermined time has passed after previous measurement of the real temperature. Therefore, the flow compensation means 6 can re-specify and update the temperature-time characteristic of the target fluid on a regular basis. Since the specified temperature-time characteristic can be updated into the newly calculated temperature-time characteristic, the temperature-time characteristic can be made suitable. Because of this, temperature compensation can be performed with low electric power consumption, versatility of the target fluid can be improved, and highly accurate flow compensation can be implemented.

(**Embodiment 3**)

A flow meter device according to Embodiment 3 of the present invention has fundamentally the same configuration as that of Embodiment 1, except for a timing at which the temperature measuring means 8 measures the real temperature in control for the measurement of the flow rate. Regarding the flow meter device having such a configuration, control for its operation and its action will be described with reference to Fig. 4. Fig. 4 is a flowchart showing exemplary control of the operation of the flow meter device according to Embodiment 3 of the present invention.

In the flow meter device of the present embodiment, like Embodiment 1 or Embodiment 2, the control means 7 is configured to cause the temperature measuring means 8 to singly measure a real temperature of a target fluid. The flow compensation means 6 is configured to calculate a temperature (calculated temperature) based on a propagation time measured by the propagation time measuring means 4, and makes compensation for the flow rate using the calculated temperature in the state where the real temperature is not measured by the temperature measuring means 8. A specific configuration of the flow meter device is the same as that of Fig. 1 described in Embodiment 1.

In Embodiment 1, the control means 7 causes the temperature measuring means 8 to measure the real temperature in a state where the temperature-time characteristic of the target fluid has not been specified yet. In the present embodiment, like Embodiment 2, the control means 7 is configured to cause the temperature measuring means 8 to singly measure the temperature on a regular basis. The flow compensation means 6 is configured to specify and update a temperature-time characteristic based on a presently measured temperature, when a measured real temperature changes by a preset predetermined value or greater from a temperature measured when the temperature-time characteristic has been updated previously, as well as in the state where the temperature-time characteristic has not been specified.

Specifically, as shown in Fig. 4, initially, the control means 7 starts control for measurement of the flow rate (step S201), and determines whether or not a time is a timing at which the flow rate is measured (step S202). If it is determined that the time is not the preset timing (No in step S202), the control means 7 repeats this determination. On the other hand, if it is determined that the time is the timing (Yes in step S202), the control means 7 activates the propagation time measuring means 4 (step S203), thereby actuating the first ultrasonic transducer 2 and the second ultrasonic transducer 3 (step S204).

The propagation time measuring means 4 measures a propagation time **t** of an ultrasonic signal transmitted and received between the ultrasonic transducers 2 and 3, and outputs the propagation time to the flow calculating means 5 (step S205). The flow calculating means 5 calculates a flow rate **Q** of the target fluid flowing through the fluid passage 1 based on the measured propagation time **t** (step S206). The flow compensation means 6 calculates a sound velocity **v** of the target fluid based on the propagation time **t** according to the expression (formula) (4) (step S207). Then, the flow compensation means 6 determines whether or not the temperature-propagation time characteristic of the target fluid has been calculated (step S208).

If it is determined that the temperature-propagation time characteristic of the target fluid has not been calculated (No in step S208), the temperature measuring means 8 measures the real temperature of the target fluid (step S209). Receiving a result of the measurement of the real temperature, the flow compensation means 6 determines whether or not the number of times the real temperature of the target fluid has been measured is twice or more (step S210). If it is determined that the number of times the real temperature of the target fluid has been measured is twice or more (Yes in step S210), the flow compensation means 6 calculates and specifies a temperature-propagation time characteristic based on real temperatures and propagation times at two or more points (step S211). Then, the flow compensation means 6 calculates the calculated temperature of the target fluid based on the propagation time, with reference to the calculated temperature-propagation time characteristic (step S212).

On the other hand, if it is determined that the number of times the real temperature of the target fluid has been measured is not twice or more, i.e., once (No in step S210), the flow compensation means 6 sets the measured real temperature as the temperature of the target fluid (step S213).

If it is determine that the temperature-propagation time characteristic has been calculated (Yes in step S208), the flow compensation means 6 calculates the calculated temperature of the target fluid with reference to the calculated temperature-propagation time characteristic (step S215). Then, the flow compensation means 6 determines whether or not a temperature change from a previously measured real temperature has reached a value equal to or greater than a preset predetermined value (in Fig. 4, whether or not a temperature change from a previously measured real temperature is less than a threshold) (step S216). The predetermined value (or threshold) of the temperature change is suitably set depending on the kind, use, conditions such as installation location of the flow meter device of the present embodiment, and is not particularly limited. One example of the predetermined value may be set to 5 degrees C as the temperature change.

If it is determined that the temperature change has reached the value equal to or greater than the predetermined value (temperature change is not less than the threshold) (No in step S216), the control means 7 causes the temperature measuring means 8 to measure the real temperature (step S209). After that, the flow compensation means 6 calculates the temperature-time characteristic (step S210, step S211) or sets the real temperature (step S210, S213). On the other hand, if it is determined that the temperature change has not reached the value equal to or greater than the preset predetermined value (temperature change is less than the threshold) (Yes in step S216), the flow compensation means 6 skips calculation of the calculated temperature of the target fluid (step S212).

Then, the flow compensation means 6 makes compensation for the flow rate calculated by the flow calculating means 5,with reference to the calculated temperature-propagation time characteristic, or based on the real temperature calculated by the flow calculating means 5, thereby deriving a flow rate at a desired temperature (step S214). After that, the process returns to step (step S202) of determinations as to whether or not a time is a timing at which the flow rate is measured, and the control means 7 repeats the series of control processes.

As described above, in the present embodiment, before the temperature-propagation time characteristic of the target fluid is specified, the flow compensation means 6 makes compensation for the calculated flow based on the real temperature measured by the temperature measuring means 8, thereby deriving the flow rate at the desired temperature, whereas after the temperature-propagation time characteristic of the target fluid has been specified, the flow compensation means 6 calculates the calculated temperature of the target fluid only based on the propagation time measured by the propagation time measuring means 4. Therefore, the temperature measuring means 8 need not measure the real temperature all the time, which can achieve low electric power consumption.

In the present embodiment, furthermore, the temperature-propagation time characteristic of the target fluid is specified and updated depending on a kind of the target fluid, which makes it possible to learn a temperature-time characteristic depending on the target fluid. Since plural kinds of target fluids can be addressed in this way, temperature compensation can be performed with low electric power consumption and versatility of the target fluid can be improved.

In the present embodiment, moreover, if it is determined that the previously measured real temperature changes by a predetermined value or greater, the temperature measuring means 8 re-measures the real temperature. Therefore, the flow compensation means 6 can re-learn and update the temperature-time characteristic. Since the specified temperature-time characteristic is updated into the newly calculated temperature-time characteristic, the temperature-time characteristic can be made suitable. Because of this, temperature compensation can be performed with low electric power consumption, versatility of the target fluid can be improved, and highly accurate flow compensation can be implemented.

(Embodiment 4)

A flow meter device according to Embodiment 4 of the present invention has fundamentally the same configuration as that of Embodiment 1, Embodiment 2 or Embodiment 3, except that the flow compensation means 6 is configured to hold a temperature difference between a real temperature and a calculated temperature as a temperature compensation value, and to make compensation for the calculated temperature based on the temperature compensation value when the flow compensation means 6 makes compensation for the flow rate only based on the calculated temperature. Regarding the flow meter device having such a configuration, control for its operation and its action will be described with reference to Fig. 5. Fig. 5 is a flowchart showing exemplary control of the operation of the flow meter device according to Embodiment 4 of the present invention.

In the flow meter device of the present embodiment, like Embodiment 1 to Embodiment 3, the control means 7 is configured to cause the temperature measuring means 8 to singly measure a real temperature of a target fluid. The flow compensation means 6 is configured to calculate a temperature (calculated temperature) based on a propagation time measured by the propagation time measuring means 4, and make compensation for the flow rate using the calculated temperature in the state where the real temperature is not measured by the temperature measuring means 8. A specific configuration of the flow meter device is the same as that of Fig. 1 described in Embodiment 1.

In the present embodiment, in addition, the flow compensation means 6 calculates a temperature difference between the measured real temperature and the calculated temperature, hold the temperature difference as a temperature compensation value, and makes compensation for the flow rate after making compensation for the calculated temperature using the temperature compensation value, when the flow compensation means 6 makes compensation for the flow rate using the calculated temperature. In particular, in the present embodiment, the control means 7 is configured to cause the temperature measuring means 8 to singly measure the temperature on a regular basis, and the flow compensation means 6 is configured to update the held temperature compensation value based on the temperature measured on a regular basis.

Specifically, as shown in Fig. 5, initially, the control means 7 starts control for measurement of the flow rate (step S301). The flow compensation means 6 performs initialization as $\Delta$**T** = 0 for start of the control, when a temperature difference (**T - Treal**) between a calculated temperature **T** of the target fluid calculated based on the propagation time and a real temperature **Treal** measured by the temperature measuring means 8 is a temperature compensation value $\Delta$**T** (step 302). Then, the control means 7 determines whether or not a time is a timing at which the flow rate is measured (step S303). If it is determined that the time is not the timing (No in step S303), the control means 7 repeats this determination. On the other hand, if it is determined that the time is the timing (Yes in step S303), the control means 7 activates the propagation time measuring means 4 (step S304), thereby actuating the first ultrasonic transducer 2 and the second ultrasonic c transducer 3 (step S305).

The propagation time measuring means 4 measures a propagation time of an ultrasonic signal transmitted and received between the ultrasonic transducers 2 and 3, and outputs the propagation time to the flow calculating means 5 (step S306). The flow calculating means 5 calculates a flow rate **Q** of the target fluid flowing through the fluid passage 1 based on the measured propagation time (step S307). The flow compensation means 6 calculates a temperature **T** based on the propagation time (step S308). The flow compensation means 6 makes compensation for the calculated temperature **T** using the temperature compensation value $\Delta$**T** (in Fig. 5, **T** -$\Delta$**T**) to derive a compensated temperature **T'**, and makes compensation for the flow rate Q calculated by the flow calculating means 5 based on the compensated temperature **T'**, thereby deriving a flow rate **Q'** at a desired temperature (step S310).

Then, the flow compensation means 6 determines whether or not there is a history of measurement of the real temperature of the target fluid (whether or not the real temperature has been measured once or more) (step S311). If it is determined that there is no history (the real temperature has not been measured even once) (No in step S311), the control means 7 activates the temperature measuring means 8 (step S312), and the temperature measuring means 8 measures the real temperature **Treal** of the target fluid (step S313). Based on a result of the measurement of the real temperature **Treal**, the flow compensation means 6 derives the difference (**T - Treal**) between the previously calculated temperature **T** and the measured real temperature **Treal** as the updated (new) temperature compensation value $\Delta$**T** (step S314). After that, the process returns to step (step S303) of determinations as to whether or not a time is the timing at which the flow rate is measured, and the control means 7 repeats the series of control processes.

On the other hand, if it is determined that there is a history of measurement of the real temperature of the target fluid (the real temperature has been measured once or more) (Yes in step S311), the control means 7 determines whether or not a predetermined time has passed after the previous measurement of the real temperature (in Fig. 5, whether or not a time that has passed is equal to or less than a predetermined threshold) (step S315). The predetermined time is similar to that of Embodiment 2.

If it is determined that the predetermined time has passed (the time that passed exceeds the predetermined threshold) (No in step S315), the control means 7 causes the temperature measuring means 8 to measure the real temperature, and the flow compensation means 6 updates the temperature compensation value ΔT (step S312~ S314). On the other hand, if it is determined that the predetermined time has not passed (the time that has passed is equal to or less than the predetermined threshold) (Yes in step S315), the process returns to step (step S303) of determinations as to whether or not a time is the timing at which the flow rate is measured, and the control means 7 repeats the series of control processes.

As described above, in the present embodiment, in a routine (ordinary or normal state), the flow compensation means 6 makes compensation for the flow rate calculated by the flow calculating means 5 based on the compensated temperature **T'** calculated based on the propagation time and the temperature compensation value Δ**T**, thereby deriving a flow rate at a desired temperature. In contrast, in a case where the real temperature has not been measured yet, or a case where the predetermined time or longer has passed after the previous measurement of the real temperature, the temperature measuring means 8 re-measures the real temperature, and the flow compensation means 6 derives the difference between the calculated temperature and the real temperature as the temperature compensation value Δ**T**. Therefore, the temperature measuring means 8 need not measure the real temperature all the time. In the state where the real temperature is not measured by the temperature measuring means 8, the flow compensation means 6 may make compensation for the flow rate using the calculated temperature calculated based on the propagation time. As a result, low electric power consumption is achieved.

In the present embodiment, furthermore, the temperature measuring means 8 measures the real temperature on a regular basis, and the flow compensation means 6 derives the difference between the real temperature and the calculated temperature as new (updated) temperature compensation value Δ**T**. The updated temperature compensation value Δ**T** can be reflected on the temperature compensation value for use in the calculation of the calculated temperature in the routine. This makes it possible to calculate the fluid temperature accurately. Therefore, temperature compensation can be implemented with low electric power consumption and highly accurate flow compensation can be implemented.

(**Embodiment 5**)

A flow meter device according to Embodiment 5 of the present invention has fundamentally the same configuration as that of Embodiment 4, except for a timing at which the temperature measuring means 8 measures the real temperature in control for the measurement of the flow rate. Regarding the flow meter device having such a configuration, control for its operation and its action will be described with reference to Fig. 6. Fig. 6 is a flowchart showing exemplary control of the operation of the flow meter device according to Embodiment 5 of the present invention.

In the flow meter device of the present embodiment, like Embodiment 4, the control means 7 is configured to cause the temperature measuring means 8 to singly measure a real temperature of a target fluid. The flow compensation means 6 is configured to calculate a temperature (calculated temperature) based on a propagation time measured by the propagation time measuring means 4, and makes compensation for the flow rate using the calculated temperature in the state in which the real temperature is not measured by the temperature measuring means 8. A specific configuration of the flow meter device is the same as that of Fig. 1 described in Embodiment 1.

In the present embodiment, in addition, the flow compensation means 6 calculates a temperature difference between the measured real temperature and the calculated temperature, holds the temperature difference as a temperature compensation value, and makes compensation for the flow rate after making compensation for the calculated temperature using the temperature compensation value, when the flow compensation means 6 makes compensation for the flow rate using the calculated temperature. In particular, in the present embodiment, when the flow rate calculated by the flow calculating means 5 is equal to or greater than a preset predetermined flow rate, the control means 7 causes the temperature measuring means 8 to measure the real temperature, and the flow compensation means 6 is configured to update the held temperature compensation value based on the measured real temperature.

Specifically, as shown in Fig. 6, initially, the control means 7 starts control for measurement of the flow rate (step S401). The flow compensation means 6 performs initialization as Δ**T** = 0 for start of the control (step S402). Then, the control means 7 determines whether or not a time is a timing at which the flow rate is measured (step S403). If it is determined that the time is not the timing (No in step S403), the control means 7 repeats this determination. On the other hand, if it is determined that the time is the timing (Yes in step S403), the control means 7 activates the propagation time measuring means 4 (step S404), thereby actuating the first ultrasonic transducer 2 and the second ultrasonic transducer 3 (step S405).

The propagation time measuring means 4 measures a propagation time of an ultrasonic signal transmitted and received between the ultrasonic transducers 2 and 3, and outputs the propagation time to the flow calculating means 5 (step S406). The flow calculating means 5 calculates a flow rate **Q** of the target fluid flowing through the fluid passage 1 based on the measured propagation time (step S407). The flow compensation means 6 calculates the temperature **T** based on the propagation time (step S408), and makes compensation for the calculated temperature **T** using the temperature compensation value Δ**T** (in Fig. 6, **T** -Δ**T**) to derive a compensated temperature **T'** (step S409). The flow compensation means 6 makes compensation for the flow rate **Q** calculated by the flow calculating means 5 based on the compensated temperature **T'**, thereby deriving a flow rate **Q'** at a desired temperature (step S410).

Then, the control means 7 determines whether or not the flow rate **Q** calculated by the flow calculating means 5 is equal to or greater than a preset predetermined flow rate (in Fig. 6, whether or not the flow rate **Q** is equal to or less than a threshold) (step S411). If it is determined that the flow rate **Q** is equal to or greater than the predetermined flow rate (the flow rate **Q** is greater than the threshold) (No in step S41 1), the control means 7 activates the temperature measuring means 8 (step S412). The temperature measuring means 8 measures a real temperature **Treat** of the target fluid (step S413). Receiving a result of the measurement of the real temperature **Treal**, the flow compensation means 6 derives a difference (**T -Treal**) between the previously calculated temperature **T** and the measured real temperature **Treal** as an updated (new) temperature compensation value Δ**T** (step S414). After that, the process returns to step (step S403) of determinations as to whether or not a time is the timing at which the flow rate is measured, and the control means 7 repeats the series of control processes.

If it is determined that the flow rate **Q** is less than the predetermined flow rate (the flow rate **Q** is equal to or less than the threshold) (Yes in step S411), the process returns to step (step S403) of determinations as to whether or not a time is the timing at which the flow rate is measured, and the control means 7 repeats the series of control processes.

As described above, in the present embodiment, in a routine (ordinary or normal state), the flow compensation means 6 makes compensation for the flow rate calculated by the flow calculating means 5 based on the compensated temperature **'T'** calculated based on the propagation time and the temperature compensation value Δ**T**, thereby deriving the flow rate at the desired temperature. Then, if it is determined that the flow rate is equal to or greater than the predetermined value, the temperature measuring means 8 measures the real temperature, and the flow compensation means 6 derives the difference between the real temperature and the calculated temperature as the updated temperature compensation value Δ**T**. Therefore, the temperature measuring means 8 need not measure the real temperature all the time, and the flow compensation means 6 may make compensation for the flow rate based on the calculated temperature calculated based on the propagation time in the state in which the real temperature is not measured by the temperature measuring means 8, which can achieve low electric power consumption.

Furthermore, in the present embodiment, when the flow rate of the target fluid is equal to or greater than the predetermined value, the temperature measuring means 8 measures the real temperature, and the flow compensation means 6 derives the difference between the real temperature and the calculated temperature as the updated temperature compensation value Δ**T**. The updated temperature compensation value Δ**T** can be reflected on the temperature compensation value for use in the calculation of the calculated temperature in the routine. This makes it possible to calculate the fluid temperature accurately. Therefore, the flow rate compensation can be implemented with low electric power consumption and with high accuracy.

(**Embodiment 6**)

A flow meter device according to Embodiment 6 of the present invention has fundamentally the same configuration as that of Embodiment 4, except for a timing at which the temperature measuring means 8 measures the real temperature in the control for the measurement of the flow rate. Regarding the flow meter device having such a configuration, control for its operation and its action will be described with reference to Fig. 7. Fig. 7 is a flowchart showing exemplary control of the operation of the flow meter device according to Embodiment 6 of the present invention.

In the flow meter device of the present embodiment, like Embodiment 4, the control means 7 is configured to cause the temperature measuring means 8 to singly measure a real temperature of a target fluid. The flow compensation means 6 is configured to calculate a temperature (calculated temperature) based on a propagation time measured by the propagation time measuring means 4, and make compensation for the flow rate using the calculated temperature in the state where the real temperature is not measured by the temperature measuring means 8. A specific configuration of the flow meter device is the same as that of Fig. 1 described in Embodiment 1.

In the present embodiment, in addition, the flow compensation means 6 calculates a temperature difference between the measured real temperature and the calculated temperature, hold the temperature difference as a temperature compensation value, and makes compensation for the flow rate after making compensation for the calculated temperature using the temperature compensation value, when the flow compensation means 6 makes compensation for the flow rate using the calculated temperature. In particular, in the present embodiment, the control means 7 is configured to cause the temperature measuring means 8 to measure the temperature of the target fluid and the flow compensation means 6 is configured to update the held temperature compensation value based on the measured real temperature, when the temperature measured by the temperature measuring means 8 changes by a predetermined value or greater from a previously measured temperature.

Specifically, as shown in Fig. 7, initially, the control means 7 starts control for the measurement of the flow rate (step S501). The flow compensation means 6 performs initialization as $\Delta$**T** = 0 for start of the control (step S502). Then, the control means 7 determines whether or not a time is a timing at which the flow rate is measured (step S503). If it is determined that the time is not the timing (No in step S503), the control means 7 repeats this determination. On the other hand, if it is determined that the time is the timing (Yes in step S503), the control means 7 activates the propagation time measuring means 4 (step S504), thereby actuating the first ultrasonic transducer 2 and the second ultrasonic transducer 3 (step S505).

The propagation time measuring means 4 measures a propagation time of an ultrasonic signal transmitted and received between the ultrasonic transducers 2 and 3, and outputs the propagation time to the flow calculating means 5 (step S506). The flow calculating means 5 calculates a flow rate **Q** of the target fluid flowing through the fluid passage 1 based on the measured propagation time (step S507). The flow compensation means 6 calculates the calculated temperature **T** based on the propagation time (step S508). The flow compensation means 6 makes compensation for the calculated temperature **T** using the temperature compensation value $\Delta$**T** (in Fig. 7, **T** -$\Delta$**T**) to derive a compensated temperature **T'** (step S509). The flow compensation means 6 makes compensation for the flow rate **Q** calculated by the flow calculating means 5 based on the compensated temperature **T'**, thereby deriving a flow rate **Q'** at a desired temperature (step S510).

Then, the flow compensation means 6 determines whether or not there is a history of measurement of the real temperature of the target fluid (whether or not the real temperature has been measured once or more) (step S511). If it is determined that there is no history (the real temperature has not been measured even once) (No in step S511), the control means 7 activates the temperature measuring means 8 (step S512), and the temperature measuring means 8 measures the real temperature **Treal** of the target fluid (step S513). Based on a result of the measurement of the real temperature **Treal**, the flow compensation means 6 derives the difference (**T - Treal**) between the previously calculated temperature **T** and the measured real temperature **Treal** as the updated (new) temperature compensation value $\Delta$**T** (step S514). After that, the process returns to step (step S503) of determinations as to whether or not a time is the timing at which the flow rate is measured, and the control means 7 repeats the series of control processes.

On the other hand, if it is determined that there is a history of measurement of the real temperature of the target fluid (the real temperature has been measured once or more) (Yes in step S511), the control means 7 determines whether or not there is a temperature change with a predetermined value or greater after the previous measurement of the real temperature (in Fig. 7, whether or not the temperature change is equal to or less than a threshold) (step S515). The temperature change with a predetermined value or greater, i.e., the temperature change with a preset predetermined value or greater, is similar to that of Embodiment 3.

If it is determined that there is a temperature change with the predetermined value or greater (the temperature change exceeds the threshold) (No in step S515), the control means 7 causes the temperature measuring means 8 to measure the real temperature, and the flow compensation means 6 updates the temperature compensation value $\Delta$**T** (step S512 ~ S514). On the other hand, if it is determined that there is not a temperature change with the predetermined value or greater (the temperature change is equal to or less than the threshold) (Yes in step S515), the process returns to step (step S503) of determinations as to whether or not a time is a timing at which the flow rate is measured, and the control means 7 repeats the series of control processes.

As described above, in the present embodiment, in a routine (ordinary or normal state) the flow compensation means 6 makes compensation for the flow rate calculated by the flow calculating means 5 based on the compensated temperature **T'** calculated based on the propagation time and the temperature compensation value $\Delta$**T**, thereby deriving the flow rate at the desired temperature. In contrast, in a case where the real temperature of the target fluid has not been measured yet, or a case where there is a temperature change with a predetermined value or greater from the previous measurement of the real temperature, the temperature measuring means 8 measures the real temperature, and the flow compensation means 6 derives the difference between the calculated temperature and the real temperature as the updated (new) temperature compensation value $\Delta$**T**. Therefore, the temperature measuring means 8 need not measure the real temperature all the time. In the state where the temperature measuring means 8 does not measure the real temperature, the flow compensation means 6 may make compensation for the flow rate using the calculated temperature calculated based on the propagation time. As a result, low electric power consumption is achieved.

In the present embodiment, furthermore, if it is determined that there is a temperature change with the predetermined value or greater after the previous measurement of the real temperature, the control means 7 causes the temperature measuring means 8 to measure the real temperature and derives the difference between the real temperature and the calculated temperature as the updated temperature compensation value $\Delta$**T**. The updated temperature compensation value $\Delta$**T** can be reflected on the temperature compensation value for use in the calculation of the calculated temperature in the routine. This makes it possible to calculate the fluid temperature accurately. As a result, flow rate compensation can be implemented efficiently with low electric power consumption and with high accuracy

The control described in the present embodiment, i.e., the control performed by the control means 7 to cause the temperature measuring means 8 to measure the temperature of the target fluid in the case where the real temperature measured by the temperature measuring means 8 changes by the predetermined value or greater from the real temperature previously measured, may be applied to the control for specifying and updating the temperature-time characteristic described in Embodiment 1. Specifically, control may be be executed in such a manner that in the case where the real temperature is not measured on a regular basis like Embodiment 1, for example, a step similar to step S515 shown in Fig. 7 is inserted between step S008 and step S102 shown in Fig. 2.

As described above, a flow meter device of the present invention comprises a first transducer and a second transducer which are provided at a fluid passage and transmit and receive an ultrasonic signal, a temperature measuring means for measuring a temperature of a target fluid flowing through the fluid passage, a propagation time measuring means which actuates the transducers and measures a propagation time for which the ultrasonic signal is transmitted and received, a control means for controlling a measurement timing of the temperature measuring means and a measurement timing of the propagation time measuring means , a flow calculating means for calculating a flow rate based on the propagation time of the ultrasonic signal measured by the propagation time measuring means, and a flow compensation means which calculates a temperature of the target fluid based on the propagation time measured by the propagation time measuring means and makes compensation for the flow rate calculated by the flow calculating means based on the calculated temperature to derive a flow rate at a desired temperature, wherein the flow compensation means may be configured to calculate the temperature of the target fluid based on the propagation time measured by the propagation time measuring means, with reference to a temperature-propagation time characteristic of the target fluid which is specified based on the propagation time measured by the propagation time measuring means and the temperature measured by the temperature measuring means.

In accordance with this configuration, the temperature-propagation time characteristic (or temperature-sound velocity characteristic) of the target fluid is specified based on results of the measurement of the propagation time and the real temperature of the target fluid which occur plural times, the temperature of the target fluid is calculated based on the propagation time, and the compensation is made to derive the flow rate at the desired temperature.

Therefore, initially, before the temperature-propagation time characteristic (or temperature-sound velocity characteristic) of the target fluid is specified, compensation for the flow rate is made based on the temperature measured by the temperature measuring means, thereby deriving the flow rate at the desired temperature. On the other hand, after the temperature-propagation time characteristic of the target fluid has been specified, the temperature of the target fluid can be calculated only based on the propagation time. Therefore, low electric power consumption can be achieved. Since the temperature-propagation time characteristic is learned depending on the target fluid without a preset temperature-propagation time characteristic, plural kinds of target fluids can be addressed. Thus, temperature compensation can be made for plural kinds of target fluids with low electric power consumption.

Without the preset temperature-propagation time characteristic, it is possible to learn a temperature-propagation time characteristic depending on the target fluid. Therefore, plural kinds of target fluids can be addressed in this way, and temperature compensation can be achieved for plural kinds of target fluids with low electric power consumption.

Therefore, in the present invention, since the temperature-propagation time characteristic of the target fluid can be specified based on the temperature measured by the temperature measuring means and the propagation time measured by the propagation time measuring means, and the temperature of the target fluid can be calculated only based on the propagation time, low electric power consumption can be realized.

In the flow meter device having the above configuration, the temperature, measuring means may be configured to measure the temperature of the target fluid on a regular basis and the temperature-propagation time characteristic may be specified and updated for each measurement performed by the temperature measuring means.

In accordance with this configuration, since the temperature-propagation time characteristic of the target fluid may be specified and updated again on a regular basis, temperature compensation of the flow rate can be implemented with higher accuracy.

In the flow meter device having the above configuration, the temperature measuring means may be configured to measure the temperature of the target fluid on a regular basis, and the temperature-propagation time characteristic may be specified and updated based on a presently (currently) measured temperature when the measured temperature of the target fluid changes by a predetermined value or greater from a temperature measured when the temperature-propagation time characteristic has been updated previously.

In accordance with this configuration, the temperature-propagation time characteristic of the target fluid can be specified and updated again when it is determined that there is a temperature change. Therefore, temperature compensation of the flow rate can be implemented with higher accuracy.

A flow meter device of the present invention comprises a first transducer and a second transducer which are provided at a fluid passage and transmit and receive an ultrasonic signal, a temperature measuring means for measuring a temperature of a fluid flowing through the fluid passage, a propagation time measuring means which measures a propagation time for which the ultrasonic signal is transmitted and received between the first and second transducers, a flow calculating means for calculating a flow rate based on the propagation time of the ultrasonic signal measured by the propagation time measuring means, and a flow compensation means for making compensation for the flow rate calculated by the flow calculating means, based on a temperature of the fluid calculated based on the propagation time measured by the propagation time measuring means or the temperature of the fluid measured by the temperature measuring means, thereby deriving a flow rate at a desired temperature, and the flow compensation means calculates a temperature difference between the temperature of the fluid which is measured by the temperature measuring means and the temperature of the fluid calculated based on the propagation time, and holds the temperature difference as a temperature compensation value; and the flow compensation means makes compensation for the flow rate using the temperature of the fluid calculated based on the propagation time after making compensation for the calculated temperature based on the temperature compensation value.

In accordance with this configuration, in a routine (ordinary or normal state), compensation is made for the flow rate based on the temperature calculated based on the propagation time. The difference between the temperature measured by the temperature measuring means on a regular basis and the temperature calculated based on the propagation time is updated as the temperature compensation value, which is reflected as a temperature compensation value used to calculate the temperature of the fluid based on the propagation time in the routine.

Thus, in the routine, the temperature measuring means is not activated and compensation is made for the flow rate based on the temperature calculated based on the propagation time, which makes it possible to achieve low electric power consumption. As necessary, the temperature measuring means is used. For example, the temperature measuring means measures the temperature on a regular basis and thereby the temperature of the fluid is measured with high accuracy. The difference from the temperature calculated based on the propagation time is updated as the temperature compensation value, and the temperature compensation value is reflected as a temperature compensation value used to calculate the temperature of the fluid based on the propagation time in the routine. Therefore, the temperature of the fluid can be calculated with high accuracy, and compensation can be made for the flow rate at a desired temperature with high accuracy. That is, flow rate compensation can be implemented with low electric power consumption and with high accuracy.

In the flow meter device having the above configuration, the temperature measuring means may be caused to measure the temperature of the fluid at each predetermined time, and the flow compensation means may be configured to update the held temperature compensation value.

In accordance with this configuration, in a routine, compensation is made for the flow rate based on the temperature calculated based on the propagation time. The difference between the real temperature of the fluid measured by the temperature measuring means on a regular basis and the temperature of the fluid calculated based on the propagation time is updated as the temperature compensation value, which is reflected as a temperature compensation value used to calculate the temperature of the fluid based on the propagation time in the routine. Since the difference between the temperature measured by the temperature measuring means on a regular basis and the temperature calculated based on the propagation time is updated as the temperature compensation value, and this temperature compensation value is reflected as a temperature compensation value used to calculate the temperature of the fluid based on the propagation time in the routine, it becomes possible to calculate the temperature with high accuracy, and make compensation for the flow rate at a desired temperature with high accuracy. That is, flow rate compensation can be implemented with low electric power consumption and with high accuracy.

In the flow meter device having the above configuration, the temperature measuring means may be caused to measure the temperature of the fluid, and the flow compensation means may be configured to update the held temperature compensation value, when the flow rate measured by the flow calculating means is equal to or greater than a predetermined flow rate.

In accordance with this configuration, compensation is made for the flow rate with high accuracy when the flow rate is equal to or greater than the predetermined value, while compensation is made for the flow rate with low electric power consumption in other cases. Thus, both of low electric power consumption and highly accurate flow rate compensation can be achieved more efficiently.

In the flow meter device having the above configuration, the temperature measuring means may be caused to measure the temperature, and the flow compensation means may be configured to update the held temperature compensation value, when the temperature calculated based on the propagation time measured by the propagation time measuring means changes by a predetermined value or greater from the temperature of the fluid measured previously by the temperature measuring means.

In accordance with this configuration, if it is determined that there is a temperature change, the temperature compensation value is updated and flow rate compensation is performed with high accuracy, while if it is determined that there is not a substantial temperature change, flow rate compensation can be performed without updating the temperature compensation value, which results in low electric power consumption. Thus, both of low electric power consumption and highly accurate flow rate compensation can be achieved more efficiently.

Numeral modifications and alternative embodiments of the present invention will be apparent to those skilled in the art in view of the foregoing description. Accordingly, the description is to be construed as illustrative only, and is provided for the purpose of teaching those skilled in the art the best mode of carrying out the invention. The details of the structure and/or function may be varied substantially without departing from the spirit of the invention.

## Industrial Applicability

As described above, in accordance with the present invention, a flow meter device can make compensation for a flow rate with high accuracy, improve versatility of a target fluid, and achieve low electric power consumption. Therefore, the present invention is widely applicable to fields of flow meter devices for measuring flow rates of various fluids, for example, fields of a flow meter standard instruments, gas meters, tap water meters, etc..

## Reference Sings Lists

1 passage (fluid passage)

2 first ultrasonic transducer (first transducer)

3 second ultrasonic transducer (second transducer)

4 propagation time measuring means

5 flow calculating means

6 flow compensation means

7 control means

8 temperature measuring means

## Claims

**1.** A flow meter device comprising:

a first transducer and a second transducer which are provided at a fluid passage and transmit and receive an ultrasonic signal;

a temperature measuring means for measuring a temperature of a fluid flowing through the fluid passage;

a propagation time measuring means for measuring a propagation time for which the ultrasonic signal is transmitted and received between the first and second transducers;

a flow calculating means for calculating a flow rate of the fluid based on the propagation time measured by the propagation time measuring means;

a flow compensation means which calculates a temperature of the fluid based on the propagation time measured by the propagation time measuring means and makes compensation for the flow rate of the fluid using at least one of the calculated temperature and the temperature measured by the temperature measuring means; and

a control means for controlling at least an operation of the temperature measuring means and an operation of the propagation time measuring means;

wherein the control means causes the temperature measuring means to singly measure the temperature of the fluid; and

the flow compensation means calculates the temperature of the fluid based on the propagation time, and makes compensation for the flow rate using the temperature calculated based on the propagation time in a state in which the temperature is not measured by the temperature measuring means.

**2.** The flow meter device according to Claim 1, wherein the flow compensation means calculates the temperature of the fluid, with reference to a temperature-time characteristic of the fluid specified based on the propagation time measured by the propagation time measuring means or a sound velocity of the fluid calculated based on the propagation time and the temperature measured by the temperature measuring means; and
the flow compensation means makes compensation for the flow rate calculated by the flow calculating means based on the calculated temperature to derive a flow rate at a desired temperature.

**3.** The flow meter device according to Claim 2, wherein the control means causes the temperature measuring means to singly measure the temperature on a regular basis; and
the flow compensation means specifies and updates the temperature-time characteristic for each measurement of the temperature which is performed by the temperature measuring means.

4. The flow meter device according to Claim 2,
wherein the control means causes the temperature measuring means to singly measure the temperature on a regular basis; and
when the measured temperature changes by a preset predetermined value or greater from a temperature measured when the temperature-time characteristic has been updated previously, the flow compensation means specifies and updates the temperature-time characteristic based on a presently measured temperature.

5. The flow meter device according to Claim 2,
wherein when the temperature measured by the temperature measuring means changes by a preset predetermined value or greater from a previously measured temperature, the control means causes the temperature measuring means to measure the temperature of the fluid; and
the flow compensation means specifies and updates the temperature-time characteristic based on the measured temperature.

6. The flow meter device according to Claim 1,
wherein the flow compensation means calculates a temperature difference between the temperature of the fluid which is measured by the temperature measuring means and the temperature of the fluid calculated based on the propagation time, and holds the temperature difference as a temperature compensation value; and
the flow compensation means makes compensation for the flow rate using the temperature calculated based on the propagation time after making compensation for the calculated temperature based on the temperature compensation value.

7. The flow meter device according to Claim 6,
wherein the control means causes the temperature measuring means to singly measure the temperature on a regular basis; and
the flow compensation means updates the held temperature compensation value based on the temperature measured on a regular basis.

8. The flow meter device according to Claim 6,
wherein when the flow rate calculated by the flow calculating means is equal to or greater than a preset predetermined flow rate, the control means causes the temperature measuring means to measure the temperature of the fluid; and
the flow compensation means updates the held temperature compensation value based on the measured temperature.

9. The flow meter device according to Claim 6,
wherein when the temperature measured by the temperature measuring means changes by a preset predetermined a value or greater from a previously measured temperature, the control means causes the temperature measuring means to measure the temperature of the fluid; and
the flow compensation means updates the held temperature compensation value based on the measured temperature.

# Fig. 1

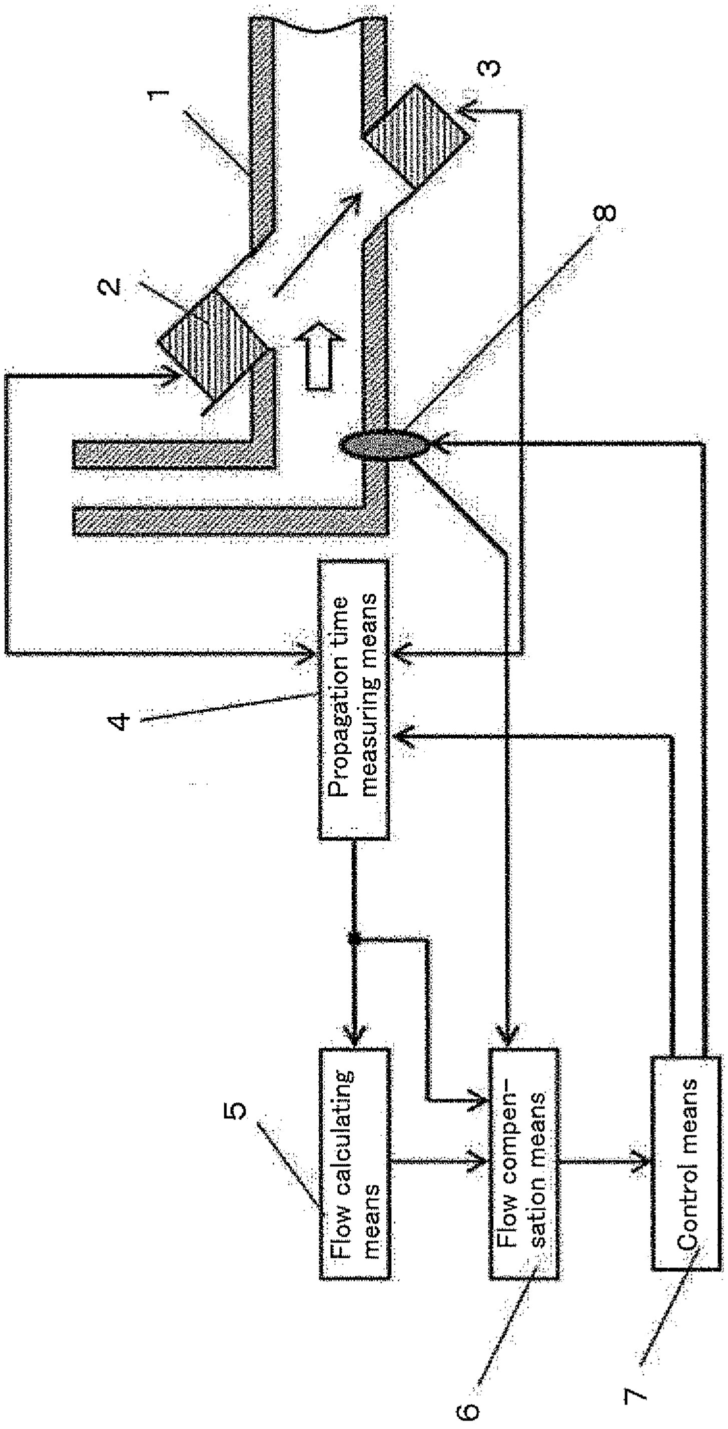


1 Fluid passage
2 First ultrasonic transducer (first transducer)
3 Second ultrasonic transducer (second transducer)
8 Temperature measuring means

Fig. 2

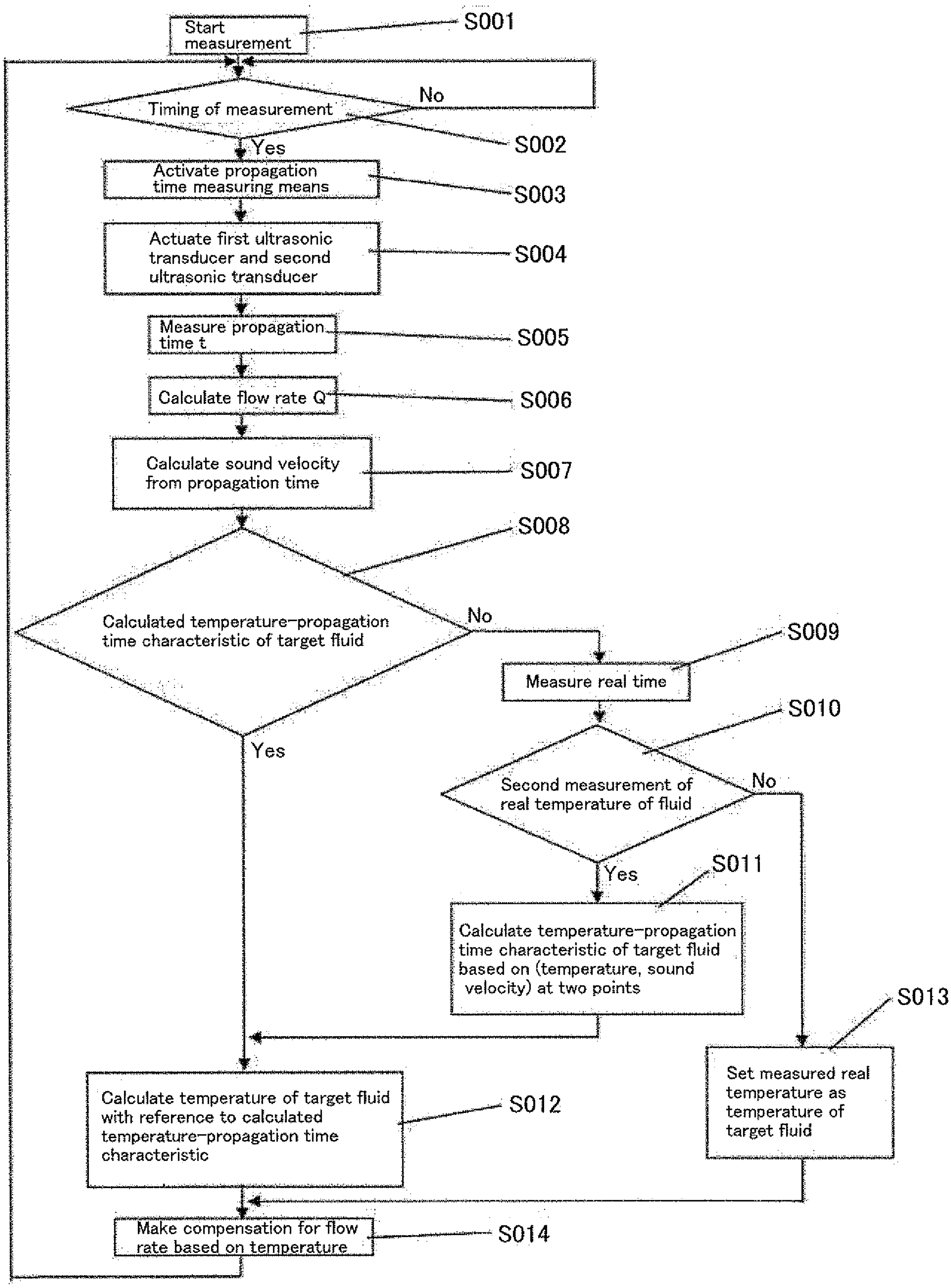
Start measurement
S001
Timing of measurement
No
Yes
S002
Activate propagation time measuring means
S003
Actuate first ultrasonic transducer and second ultrasonic transducer
S004
Measure propagation time t
S005
Calculate flow rate Q
S006
Calculate sound velocity from propagation time
S007
S008
Calculated temperature-propagation time characteristic of target fluid
No
S009
Measure real time
S010
Second measurement of real temperature of fluid
No
Yes
S011
Calculate temperature-propagation time characteristic of target fluid based on (temperature, sound velocity) at two points
S013
Set measured real temperature as temperature of target fluid
Yes
Calculate temperature of target fluid with reference to calculated temperature-propagation time characteristic
S012
Make compensation for flow rate based on temperature
S014

Fig. 3

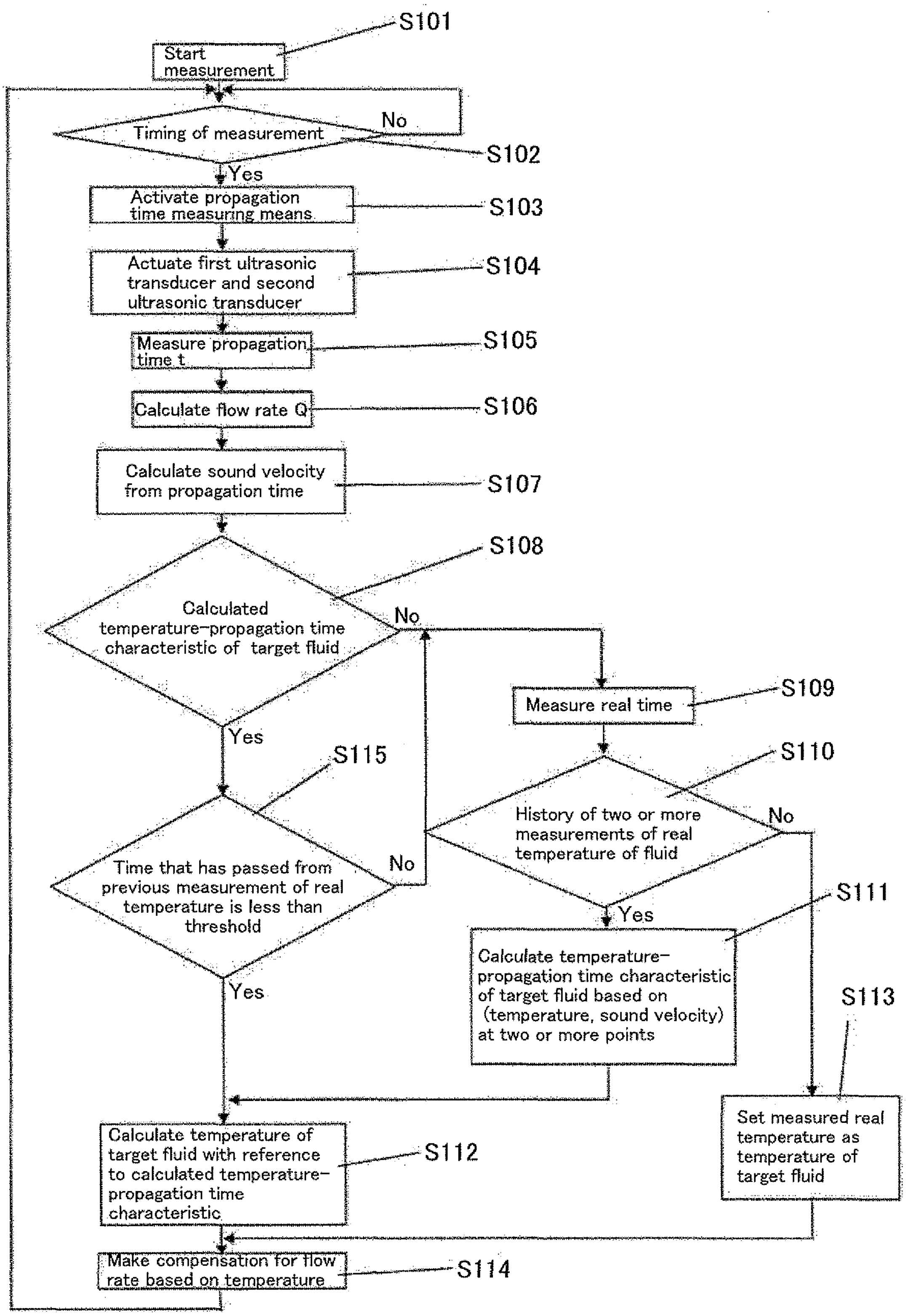
S101
Start measurement
Timing of measurement
No
S102
Yes
Activate propagation time measuring means
S103
Actuate first ultrasonic transducer and second ultrasonic transducer
S104
Measure propagation time t
S105
Calculate flow rate Q
S106
Calculate sound velocity from propagation time
S107
S108
Calculated temperature–propagation time characteristic of target fluid
No
Yes
S109
Measure real time
S110
History of two or more measurements of real temperature of fluid
No
Yes
S115
Time that has passed from previous measurement of real temperature is less than threshold
No
Yes
S111
Calculate temperature–propagation time characteristic of target fluid based on (temperature, sound velocity) at two or more points
S113
Set measured real temperature as temperature of target fluid
Calculate temperature of target fluid with reference to calculated temperature–propagation time characteristic
S112
Make compensation for flow rate based on temperature
S114

Fig. 4

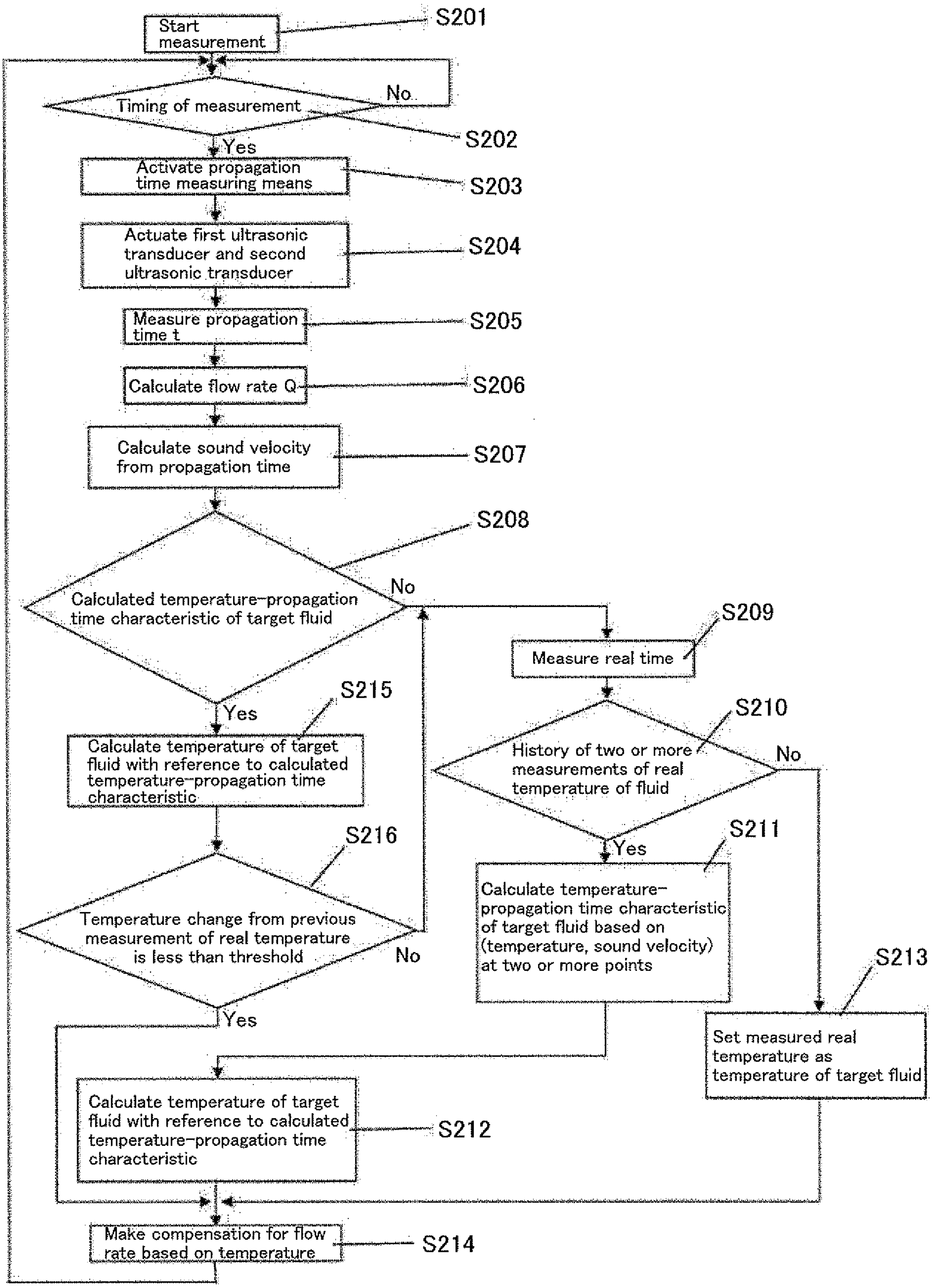
Start measurement
S201
Timing of measurement
No
S202
Yes
Activate propagation time measuring means
S203
Actuate first ultrasonic transducer and second ultrasonic transducer
S204
Measure propagation time t
S205
Calculate flow rate Q
S206
Calculate sound velocity from propagation time
S207
S208
Calculated temperature-propagation time characteristic of target fluid
No
S209
Measure real time
S210
History of two or more measurements of real temperature of fluid
No
Yes
S211
Calculate temperature-propagation time characteristic of target fluid based on (temperature, sound velocity) at two or more points
S213
Set measured real temperature as temperature of target fluid
Yes
S215
Calculate temperature of target fluid with reference to calculated temperature-propagation time characteristic
S216
Temperature change from previous measurement of real temperature is less than threshold
No
Yes
Calculate temperature of target fluid with reference to calculated temperature-propagation time characteristic
S212
Make compensation for flow rate based on temperature
S214

Fig. 5

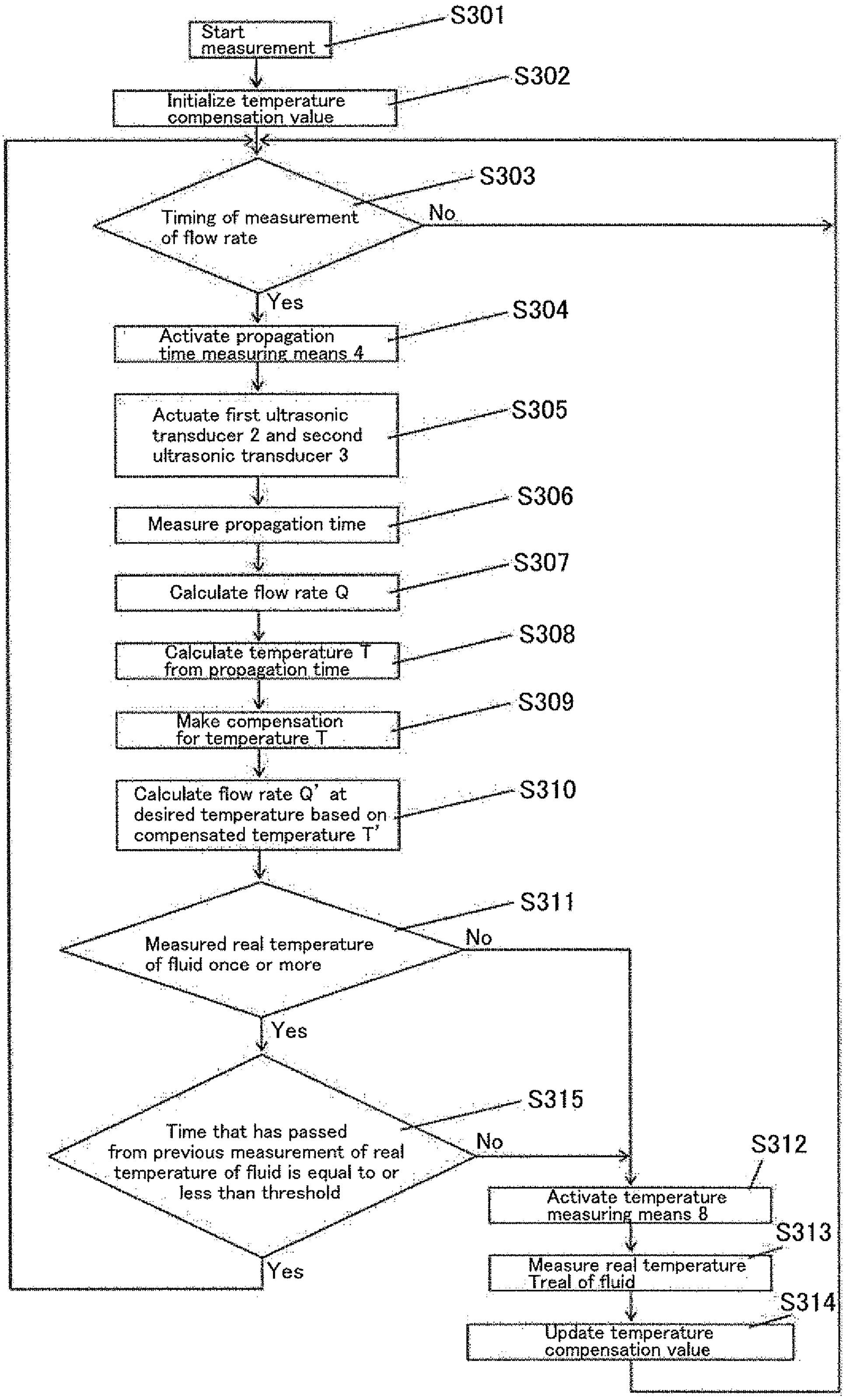
S301
Start measurement
S302
Initialize temperature compensation value
S303
Timing of measurement of flow rate
No
Yes
S304
Activate propagation time measuring means 4
S305
Actuate first ultrasonic transducer 2 and second ultrasonic transducer 3
S306
Measure propagation time
S307
Calculate flow rate Q
S308
Calculate temperature T from propagation time
S309
Make compensation for temperature T
S310
Calculate flow rate Q' at desired temperature based on compensated temperature T'
S311
Measured real temperature of fluid once or more
No
Yes
S315
Time that has passed from previous measurement of real temperature of fluid is equal to or less than threshold
No
Yes
S312
Activate temperature measuring means 8
S313
Measure real temperature Treal of fluid
S314
Update temperature compensation value

Fig. 6

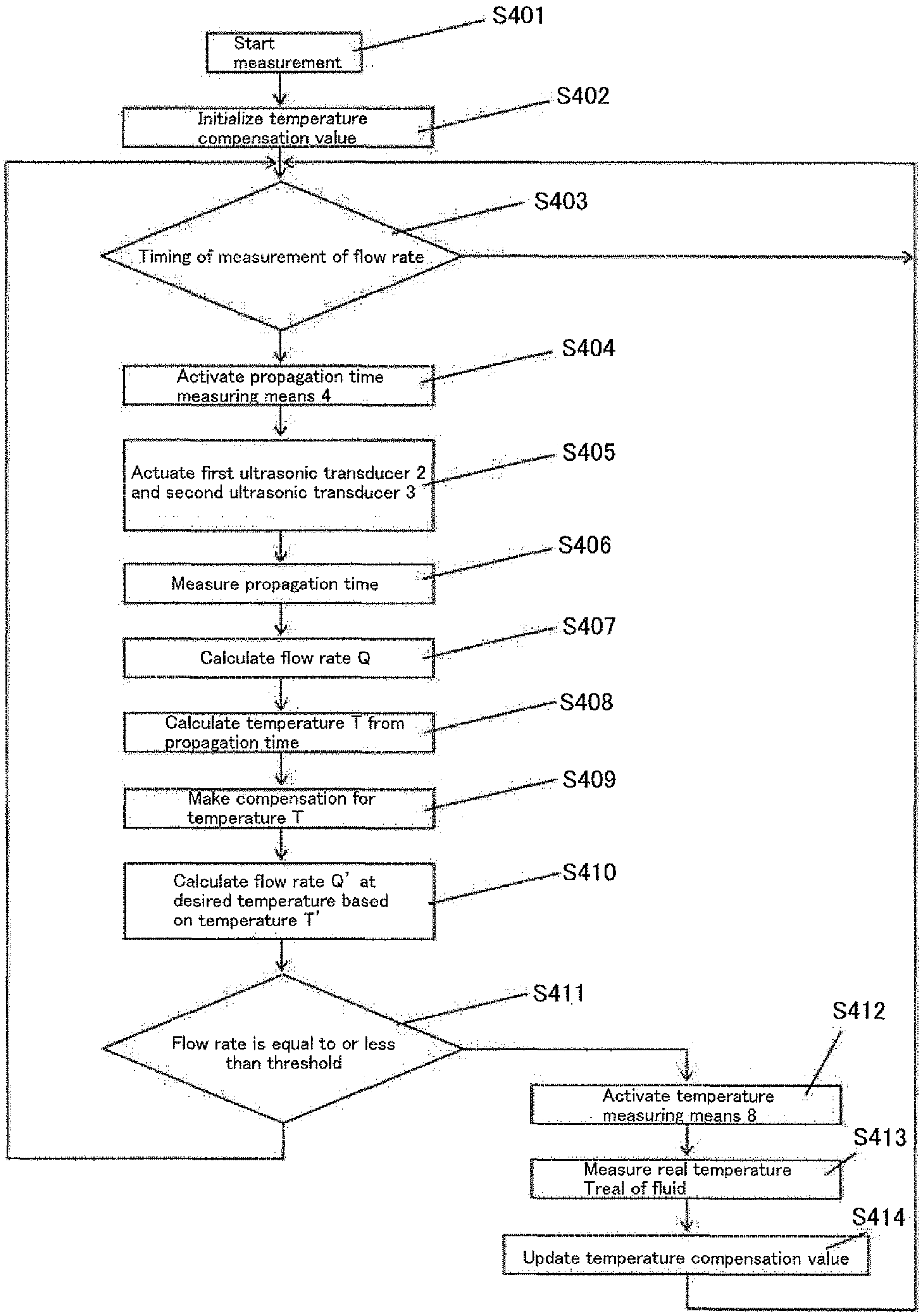
S401
Start measurement
S402
Initialize temperature compensation value
S403
Timing of measurement of flow rate
S404
Activate propagation time measuring means 4
S405
Actuate first ultrasonic transducer 2 and second ultrasonic transducer 3
S406
Measure propagation time
S407
Calculate flow rate Q
S408
Calculate temperature T from propagation time
S409
Make compensation for temperature T
S410
Calculate flow rate Q' at desired temperature based on temperature T'
S411
Flow rate is equal to or less than threshold
S412
Activate temperature measuring means 8
S413
Measure real temperature Treal of fluid
S414
Update temperature compensation value

# Fig. 7

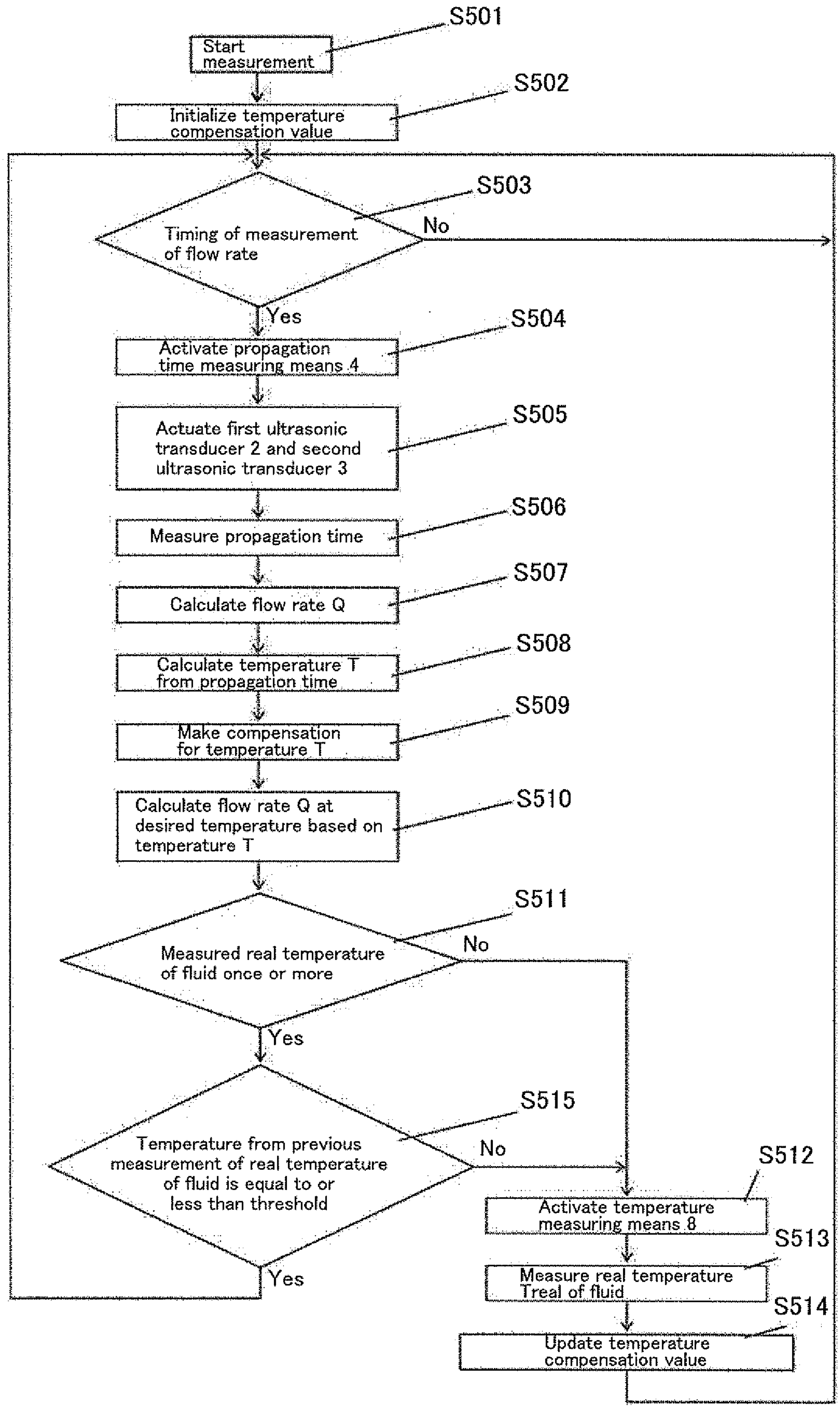
S501
Start measurement
S502
Initialize temperature compensation value
S503
Timing of measurement of flow rate
No
Yes
S504
Activate propagation time measuring means 4
S505
Actuate first ultrasonic transducer 2 and second ultrasonic transducer 3
S506
Measure propagation time
S507
Calculate flow rate Q
S508
Calculate temperature T from propagation time
S509
Make compensation for temperature T
S510
Calculate flow rate Q at desired temperature based on temperature T
S511
Measured real temperature of fluid once or more
No
Yes
S515
Temperature from previous measurement of real temperature of fluid is equal to or less than threshold
No
Yes
S512
Activate temperature measuring means 8
S513
Measure real temperature Treal of fluid
S514
Update temperature compensation value

# Fig. 8

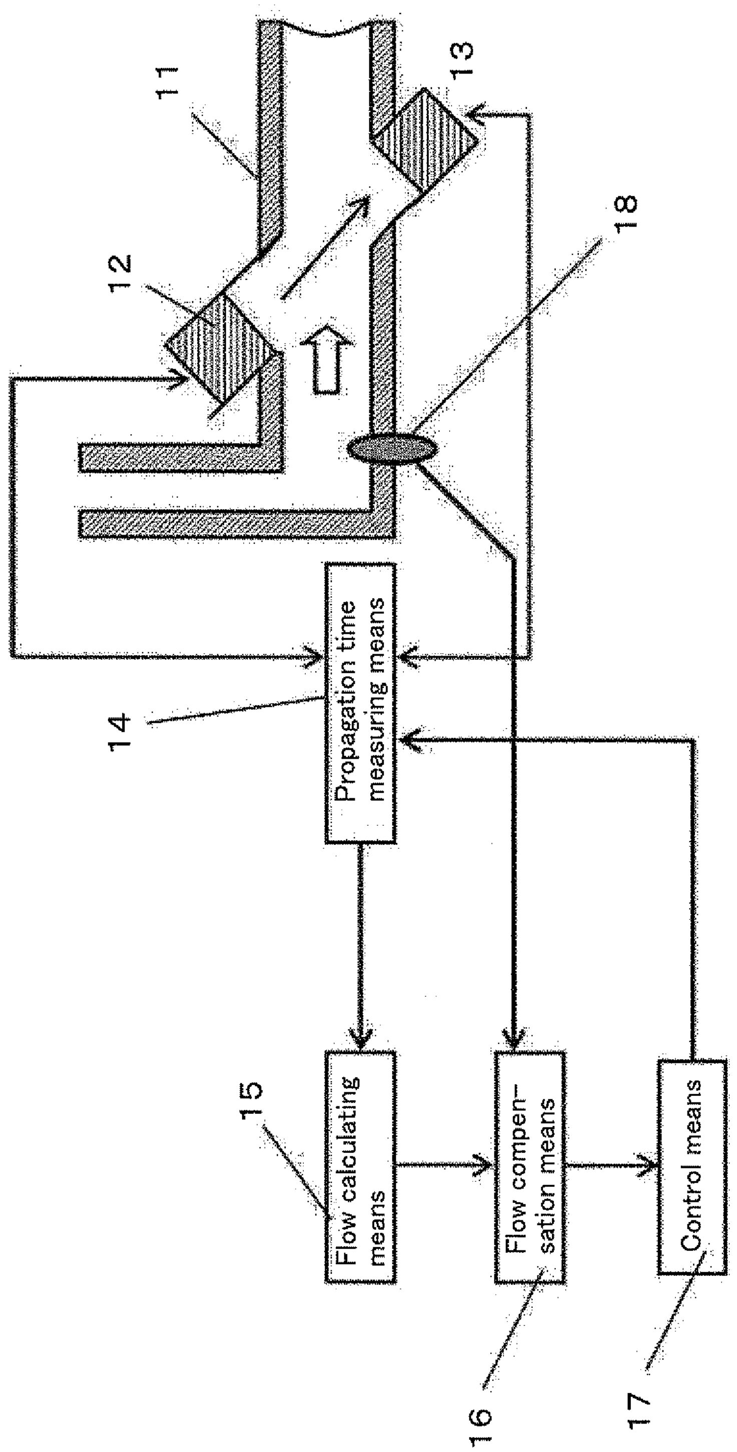
11
12
13
18
Propagation time measuring means
14
Flow calculating means
15
Flow compen-sation means
16
Control means
17

Fig. 9

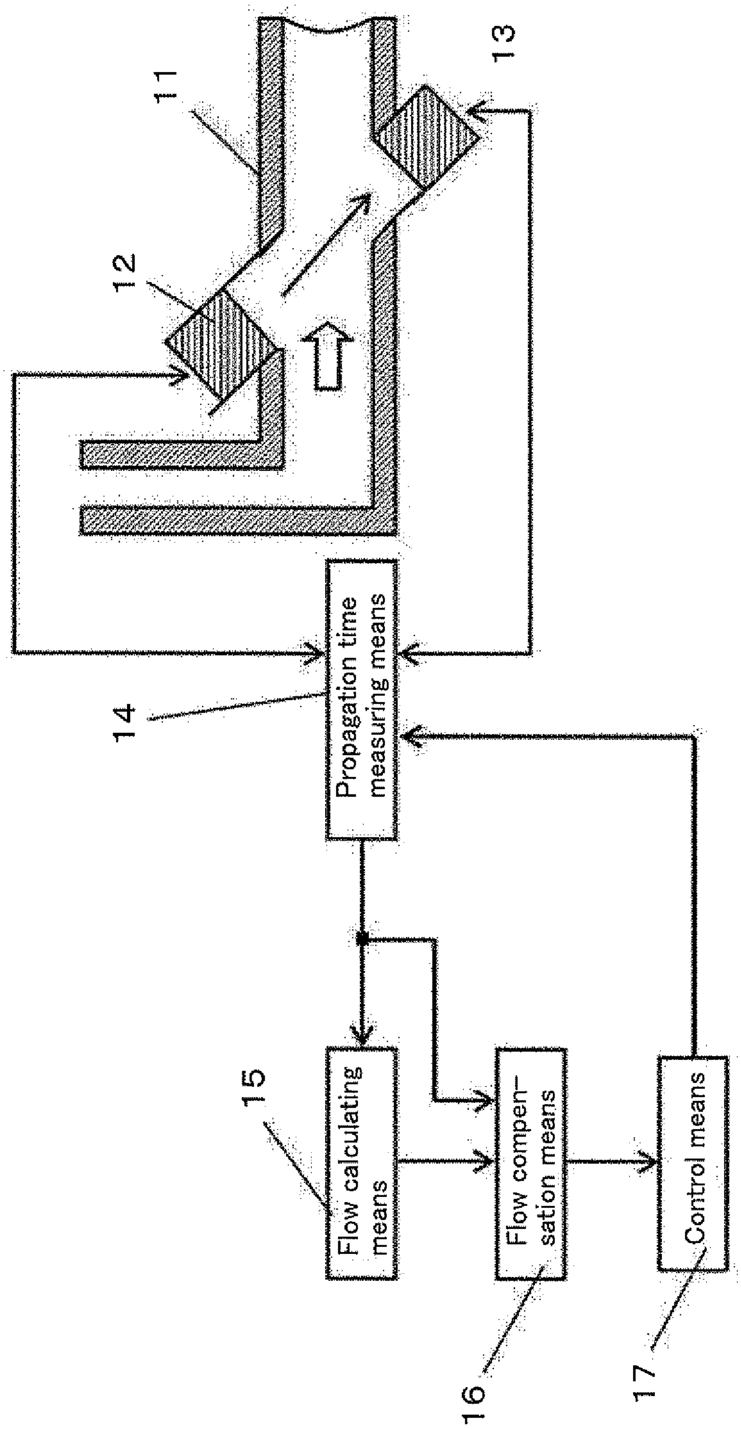
11
12
13
14
Propagation time measuring means
15
Flow calculating means
16
Flow compen-sation means
17
Control means

**INTERNATIONAL SEARCH REPORT**

International application No.
PCT/JP2011/003299

A. CLASSIFICATION OF SUBJECT MATTER
*G01F1/66*(2006.01)i

According to International Patent Classification (IPC) or to both national classification and IPC

B. FIELDS SEARCHED

Minimum documentation searched (classification system followed by classification symbols)
G01F1/66

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2001-255186 A (Matsushita Electric Industrial Co., Ltd.), 21 September 2001 (21.09.2001), paragraphs [0011] to [0018]; fig. 1 (Family: none) | 1-9 |
| Y | JP 2001-241988 A (Matsushita Electric Industrial Co., Ltd.), 07 September 2001 (07.09.2001), paragraphs [0011] to [0017]; fig. 1 to 4 (Family: none) | 1-9 |
| Y | JP 2001-249039 A (Osaka Gas Co., Ltd.), 14 September 2001 (14.09.2001), paragraphs [0013] to [0024]; fig. 1 (Family: none) | 1-9 |

☒ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 July, 2011 (25.07.11) | 09 August, 2011 (09.08.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2011/003299

C (Continuation). DOCUMENTS CONSIDERED TO BE RELEVANT

| Category* | Citation of document, with indication, where appropriate, of the relevant passages | Relevant to claim No. |
|---|---|---|
| Y | JP 11-118555 A (Matsushita Electric Industrial Co., Ltd.), 30 April 1999 (30.04.1999), paragraphs [0025] to [0028]; fig. 1, 2 (Family: none) | 4,5,9 |
| A | JP 8-304135 A (Matsushita Electric Industrial Co., Ltd.), 22 November 1996 (22.11.1996), paragraphs [0013] to [0015]; fig. 1 (Family: none) | 1 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001241988 A